# EUROPÄISCHE PATENTSCHRIFT

(11) **EP 2 826 645 B1**
(45) Veröffentlichungstag und Bekanntmachung des Hinweises auf die Patenterteilung: **21.11.2018**
(21) Anmeldenummer: 14002954.7
(22) Anmeldetag: 07.12.2010
(51) Int. Cl.: B60D 1/06, B60D 1/58

(54) **Anhängekupplung mit einer Sensoranordnung und einem Drehmitnahmekörper**
Trailer coupling with a sensor assembly and a rotating reciprocating rod
Attelage doté d'un système de capteur et d'un corps d'entraînement rotatif

(30) Priorität: 11.12.2009 DE 102009057871; 03.03.2010 DE 102010010242
(43) Veröffentlichungstag der Anmeldung: 21.01.2015
(62) Teilanmeldung aus: 10015363.4
(73) Patentinhaber: WESTFALIA - Automotive GmbH, 33378 Rheda-Wiedenbrück (DE)
(72) Erfinder: Benda, Thomas, 38114 Braunschweig (DE); Roolf, Thorsten, 31542 Bad Nenndorf (DE); Sielhorst, Bernhard, 33378 Rheda-Wiedenbrück (DE); Luchs, Oliver, 33758 Schloß Holte (DE)
(74) Vertreter: Patentanwälte Bregenzer und Reule Partnerschaftsgesellschaft mbB

(56) Entgegenhaltungen:
- GB-A- 2 342 630
- US-A- 3 947 839
- US-A- 5 558 350
- US-A- 6 053 521

## Beschreibung

Die Erfindung betrifft eine Anhängekupplung für ein Zugfahrzeug, insbesondere ein Personen-Kraftfahrzeug, gemäß dem Oberbegriff des Anspruchs 1.

Eine derartige Anhängekupplung ist beispielsweise in US 3947839A erläutert.

Eine Anhängekupplung für ein Zugfahrzeug, die einen Sensor zur Drehwinkelerfassung des Anhängers relativ zum Zugfahrzeug enthält, geht beispielsweise aus DE 103 34 000 A1 hervor. Es wird in dieser Druckschrift vorgeschlagen, den gesamten Kugelkopf relativ zu einem Stangenteil, an dem der Kugelkopf angeordnet ist, zu drehen und die relative Verdrehung des Kugelkopfes zur Stange mittels eines Magnetfeldsensors zu erfassen. Ein anderes Ausführungsbeispiel aus diesem Dokument betrifft eine Anhängekupplung, bei der der Magnetsensor fest in die Kupplungskugel integriert ist und durch ein Erregerfeld eines Magneten betätigt wird, das in der Kupplungsaufnahme angeordnet ist.

Sofern die Kupplungskugel drehbar gelagert ist, sind die Anforderungen an das Lagerkonzept sehr hoch. Daher ist in DE 10 2008 045 695 eine verbesserte Lageranordnung zum drehbeweglichen Lagern der Kupplungskugel bezüglich des Kugelträgers erläutert.

Davon ausgehend ist es die Aufgabe der vorliegenden Erfindung, eine Anhängekupplung mit einer Sensoranordnung zur Drehwinkelerfassung bereitzustellen, die eine hohe Verschleißfestigkeit aufweist.

Zur Lösung der Aufgabe ist eine Anhängekupplung gemäß der technischen Lehre des Anspruchs 1 vorgesehen.

Weiterhin wird zur Lösung dieser Aufgabe die Verwendung einer Sensoranordnung mit einer Anhängekupplung beansprucht, bei der die Sensoranordnung als eine Art Sensormodul ausgestaltet ist, und an eine entsprechend vorbereitete Anhängekupplung anbaubar ist.

Die Drehmitnahmefläche ist also beispielsweise mit der Innenfläche der Kupplungsaufnahme in Drehmitnahmekontakt. Möglich ist aber vorteilhaft auch, dass der Drehmitnahmekörper z.B. mit einer Randfläche der Kupplungsaufnahme in Drehmitnahmekontakt ist, z.B. einem Umfangsrand der Kupplungsaufnahme.

Der Drehmitnahmekörper ist vorzugsweise so ausgestaltet und/oder vorgesehen, dass er nicht vor eine Außenseite oder eine Außenfläche der Kupplungsaufnahme vorsteht, wenn die Zugkugelkupplung des Anhängers an die Anhängekupplung des Zugfahrzeugs angekuppelt ist. Der Drehmitnahmekörper ist zweckmäßigerweise nicht zum Durchdringen der Kupplungsaufnahme der Zugkugelkupplung vorgesehen und/oder ausgestaltet.

Der Drehmitnahmekörper verbleibt zweckmäßigerweise an der Anhängekupplung, wenn die Zugkugelkupplung abgekuppelt wird. Er muss also beim Abkuppeln der Zugkugelkupplung nicht demontiert werden.

Mit Kugeloberfläche im Sinne der Erfindung ist selbstverständlich die der Kupplungsaufnahme der Zugkugelkupplung zugeordnete Kugeloberfläche der Kupplungskugel gemeint, also auch deren oberseitige normgerechte Abflachung, wobei diese durch den Drehmitnahmekörper auch sozusagen ersetzt sein kann. Die Kupplungskugel hat auch unterseitig vorteilhaft eine Art Bund oder Halterand.

Bei der Anhängekupplung ist dementsprechend beispielsweise ein Aufnahmeraum für die Sensoranordnung bzw. das Sensormodul vorhanden. Weiterhin ist es zweckmäßig, wenn die Kupplungseinrichtung einen Lagerkanal und/oder einen Durchgangskanal und/oder einen Einsteckkanal zum Aufnehmen und/oder Einbringen und/oder Lagern der Drehmitnahmeeinrichtung aufweist. Mithin ist es also möglich, eine Anhängekupplung zunächst ohne die erfindungsgemäß ausgestaltete Sensoranordnung herzustellen, die dann sozusagen als Nachrüstlösung ein- oder angebaut wird. Weiterhin ist es denkbar, dass ein und dieselbe Anhängekupplung mit und ohne Sensoranordnung im Serieneinsatz ist, d.h. dass je nach Ausrüstungsstufe des jeweiligen Zugfahrzeuges wahlweise die Anhängekupplung mit und ohne Sensoranordnung montiert wird.

Dabei kann der Drehmitnahmekörper oder ein entsprechendes Ersatzteil mit dem Drehmitnahmekörper entsprechender Außenkontur montiert sein, so dass die Kugeloberfläche der Kupplungskugel, also auch deren oberseitige normgerechte Abflachung, vollständig für die Kupplungsaufnahme der Zugkugelkupplung bereitsteht, auch wenn keine Sensoranordnung montiert ist.

Ein Grundgedanke der Erfindung ist es, dass nicht die Kupplungskugel drehbar ist, sondern lediglich der Drehmitnahmekörper das jeweils bewegliche Bauteil darstellt. Somit ist die Anhängekupplung mechanisch fest. Insgesamt bildet die Kupplungseinrichtung mit der Kupplungskugel zweckmäßigerweise eine einzige, vorzugsweise einstückige, Baueinheit. Das bewegliche Glied wird durch die Drehmitnahmeeinrichtung bereitgestellt, die bei Verschleiß ohne weiteres auswechselbar ist. Damit wird insgesamt eine sehr stabile, hoch belastbare Baueinheit erzielt, die dem täglichen Fahrbetrieb optimal Stand halten kann. Dies ermöglicht unter anderem eine preisgünstige Fertigung. Weiterhin ist es auch unter Sicherheitsaspekten vorteilhaft, wenn die Kupplungseinrichtung eine in sich starre, feste Baueinheit darstellt, so dass selbst bei Ausfall der Sensoranordnung, bei einem Verschleiß des Drehmitnahmekörpers oder dergleichen, weiterhin ein sicherer, zuverlässiger Fahrbetrieb des Gespanns aus Zugfahrzeug und Anhänger möglich ist.

Die Anhängekupplung in Verbindung mit der anhängerseitigen Zugkugelkupplung ermöglicht zahlreiche Drehfreiheitsgrade, insbesondere eine bei Kurvenfahrt des Gespanns erforderliche Drehbarkeit um eine im Wesentlichen vertikale Schwenk- oder Drehachse.

Es versteht sich, dass die erfindungsgemäße Anhängekupplung zwar mehrere Drehmitnahmekörper aufweisen kann. Bevorzugt ist jedoch ein einziger Drehmitnahmekörper.

Zwischen der Sensoranordnung und dem mindestens einen Drehmitnahmekörper ist zweckmäßigerweise ein Drehübertragungsglied angeordnet. Das Drehübertragungsglied ist beispielsweise durch eine Drehwelle gebildet oder enthält eine Drehwelle.

Die Mitnahmeeinrichtung, beispielsweise deren Drehübertragungsglied, deren Drehmitnahmekörper oder sonstige Komponenten sind zweckmäßigerweise mittels einer Lageranordnung derart an der Kupplungseinrichtung bzw. deren Grundkörper gelagert, dass die Reibung zwischen dem Drehmitnahmekörper und der Kupplungsaufnahme, wenn diese auf die Anhängekupplung aufgesetzt ist, wesentlich größer ist als diejenige Reibung, die zwischen der Drehmitnahmeeinrichtung bzw. deren Komponenten und der Kupplungseinrichtung vorhanden ist. Beispielsweise ist die Reibung zwischen der Zugkugelkupplung und dem Drehmitnahmekörper zweimal so groß, zweckmäßigerweise sogar drei- bis zehnmal so groß, vorzugsweise sogar elf- bis dreißigmal so groß wie eine Reibung zwischen der Drehmitnahmeeinrichtung bzw. deren Komponenten und der Kupplungseinrichtung, d.h. beispielsweise deren Grundkörper. Man kann dies beispielsweise bereits durch Gleitlager, Lagerscheiben oder dergleichen erreichen. Es könnten aber auch Wälzlager, beispielsweise Kugellager oder Rollenlager, zur besonders leichtgängigen Lagerung der Drehmitnahmeeinrichtung bezüglich der feststehenden Komponenten der Anhängekupplung vorgesehen sein.

Bevorzugt sind die Kupplungskugel und die Sensoranordnung an einander entgegensetzten Seiten des Kugelträgers angeordnet. Somit ist es beispielsweise möglich, die Sensoranordnung sozusagen von unten an den Kugelträger anzubauen, wohingegen die Kupplungskugel an der Oberseite angeordnet ist. In diesem Zusammenhang erweist sich auch das Drehübertragungsglied als vorteilhaft, das nämlich die Drehwinkelvorgabe des Anhängers auf die Sensoranordnung überträgt.

Bevorzugt ist es, wenn das Drehübertragungsglied und der mindestens eine Drehmitnahmekörper lösbar miteinander verbunden sind. Dabei ist beispielsweise eine formschlüssige Verbindung zweckmäßig. Bevorzugt sind das Drehübertragungsglied und der Drehmitnahmekörper werkzeuglos voneinander lösbar. Aus Gründen des Diebstahlschutzes kann es allerdings auch vorteilhaft sein, wenn der Drehmitnahmekörper nur mit einem Werkzeug, insbesondere nur einem Spezialwerkzeug, mit dem Drehübertragungsglied verbunden werden kann. Jedenfalls ermöglicht die lösbare Verbindung des Drehübertragungsglieds und des Drehmitnahmekörpers ein leichtes Austauschen, beispielsweise wenn der Drehmitnahmekörper verschlissen ist.

Der mindestens eine Drehmitnahmekörper und das Drehübertragungsglied sind zweckmäßigerweise drehfest miteinander verbunden. Beispielsweise greifen der Drehmitnahmekörper und das Drehübertragungsglied formschlüssig ineinander ein. Es kann aber auch ein Verbindungsglied, beispielsweise eine Kugel, eine Nut oder dergleichen vorgesehen sein.

Eine andere Ausführungsform der Erfindung sieht vor, dass der Drehmitnahmekörper und das Drehübertragungsglied zwar drehgekoppelt, jedoch relativ zueinander beweglich sind. Die Drehkopplung wird vorzugsweise über ein Getriebe realisiert. Dieses Getriebe kann beispielsweise dadurch realisiert sein, dass der Drehmitnahmekörper das Drehübertragungsglied antreibt. Aber auch der zwischengeschaltete Getriebekomponenten, beispielsweise Zahnräder, Treibräder, Zahnriemen, Reibriemen oder dergleichen mehr sind ohne weiteres möglich.

Jedenfalls ist es bevorzugt, wenn der Drehmitnahmekörper und das Drehübertragungsglied vorzugsweise ohne Schlupf miteinander drehgekoppelt sind, insbesondere miteinander drehfest sind. Es versteht sich, dass die bewegliche Kopplung zwischen Drehmitnahmekörper und Drehübertragungsglied zwar direkt möglich ist, aber auch indirekt.

Das Getriebe kann beispielsweise ein Reibradgetriebe, ein Zahnradgetriebe, ein Riemengetriebe oder dergleichen mehr umfassen.

Das Drehübertragungsglied und der mindestens eine Drehmitnahmekörper sind zweckmäßigerweise durch eine Rastanordnung miteinander verrastbar.

Diese Rastanordnung kann beispielsweise einen Rastvorsprung an einem Bauteil aufweisen, der in eine entsprechende Rastausnehmung am anderen Bauteil rastend eingreift. Eine solche Verrastung ist beispielsweise schon dadurch möglich, dass das Drehübertragungsglied eine federnde Eigenschaft aufweist. Somit ist ein zusätzliches Federelement nicht notwendig, um die beiden Komponenten miteinander zu verrasten.

Eine bevorzugte Ausführungsform der Rastanordnung sieht vor, dass das Drehübertragungsglied und/oder der Drehmitnahmekörper ein federbelastetes Rastglied aufweist, beispielsweise eine Kugel, einen federbelasteten Bolzen oder dergleichen. Das Rastglied greift in eine insbesondere als Nut ausgestaltete Rastaufnahme ein. Es versteht sich, dass die Rastaufnahme selbstverständlich auch als Kugelkalotte ausgestaltet sein kann. Die Nut verläuft vorzugsweise parallel zu einer Drehachse, um die der Drehmitnahmekörper drehbar gelagert ist, und/oder parallel zu einer Aufsteckrichtung, in der der Drehmitnahmekörper auf das Drehübertragungsglied aufsteckbar ist.

Die Nut oder Kugelkalotte ist zweckmäßigerweise etwas schmaler als eine Breite des Rastgliedes, das an seiner Eingreifseite oder Rastseite eine Schräge oder Rundung aufweist, beispielsweise als Kugel oder gerundeter Bolzen ausgestaltet ist. Auf diese Weise wird möglichst einfach eine Spielfreiheit der Verrastung hergestellt, so dass die Drehmitnahme spielfrei ist. Das Rastglied liegt nämlich stets an den Seitenkanten der Rastaufnahme an, wenn diese etwas schmaler als das zweckmäßigerweise gerundete oder auch mindestens eine sonstige, beispielsweise keilförmige Schrägfläche aufweist, in die Rastaufnahme eingreift.

Weiterhin ist es möglich, dass zwischen dem Drehübertragungsglied und dem Drehmitnahmekörper eine Drehmomentbegrenzungseinrichtung vorhanden ist. Bei Überschreitung eines Schwellenmoments hebt diese Drehmomentbegrenzungseinrichtung den Drehschluss zwischen dem Drehmitnahmekörper und dem Drehübertragungsglied auf. Somit kann beispielsweise ein Verklemmen verhindert werden, was letztlich auch eine Zerstörung oder einen vorzeitigen Verschleiß der Drehmitnahmeeinrichtung oder auch der Sensoranordnung zur Folge haben kann.

Bevorzugt lagert das Drehübertragungsglied den Drehmitnahmekörper drehbar bezüglich eines Grundkörpers der Kupplungseinrichtung. Der Grundkörper stellt vorzugsweise einstückig den Kugelträger und die Kupplungskugel bereit. An dieser Stelle sei bemerkt, dass die Kupplungseinrichtung selbstverständlich auch mehrteilig aufgebaut sein kann, so dass beispielsweise der Kugelträger und die Kupplungskugel miteinander verschraubt sind, auch unter Zwischenschaltung eines weiteren Bauelements, beispielsweise eines Abstandsstücks.

Die Drehmitnahmeeinrichtung weist zweckmäßigerweise ein mit dem mindestens einen Drehmitnahmekörper drehgekoppeltes Erregerglied auf. Das Erregerglied ist beispielsweise ein Erregermagnet oder weist einen Erregermagneten auf. Vorzugsweise ist das Erregerglied sozusagen passiv, d.h. dass die Sensoranordnung, die zweckmäßigerweise elektrisch betrieben wird, ortsfest ist, während das Erregerglied mit der Drehmitnahmeeinrichtung mit dreht und beispielsweise ein Magnetfeld, ein elektrisches Feld erzeugt oder ablenkt. Es ist aber auch möglich, dass das Erregerglied ein optisches Glied ist, das beispielsweise Licht erzeugt und/oder einen Strahlungsverlauf beeinflusst, z.B. eine Reflektorscheibe, ein Prisma oder dergleichen.

Bevorzugt ist es, wenn eine Abschirmung für das Erregerglied vorhanden ist. Beispielsweise ist die Abschirmung an der Drehmitnahmeeinrichtung vorhanden. Es versteht sich, dass die Abschirmung aber auch an einer sonstigen Stelle, auch ortsfest, vorhanden sein kann. Die Abschirmung schützt beispielsweise vor optischen, magnetischen oder elektrischen Einflüssen. So ist die Abschirmung beispielsweise aus einem nicht magnetischen Material, zum Beispiel Aluminium. Bevorzugt ist es, wenn die Abschirmung beispielsweise an dem Drehübertragungsglied angeordnet ist und einen Schirm um das Erregerglied bildet. Man kann beispielsweise, wie in den Ausführungsbeispielen noch deutlich wird, das Erregerglied, beispielsweise den Erregermagneten, sozusagen in die Abschirmung oder einen Abschirmkörper einbetten. Es versteht sich, dass die Abschirmung einen oder mehrere Abschirmkörper, Abschirmbeschichtungen oder dergleichen aufweisen kann.

Gemäß einer erfindungsgemäßen Lösung ist der mindestens eine Drehmitnahmekörper durch eine Federanordnung in die Kontaktstellung federbelastet. Somit hält die Federanordnung den Drehmitnahmekörper bzw. die Drehmitnahmefläche desselben in Kontakt mit der Kupplungsaufnahme.

Die Federanordnung dient beispielsweise dazu, einen Ausgleich zwischen einerseits dem Drehmitnahmekörper und andererseits der Zugkugelkupplung zu schaffen. Die Federanordnung kann auch die Funktion einer Nachstelleinrichtung haben, die beispielsweise bei Verschleiß des Drehmitnahmekörpers wirkt.

Gemäß einer weiteren erfindungsgemäßen Lösung ist vorgesehen, dass der Drehmitnahmekörper in sich federnd ist, beispielsweise aus einem entsprechend flexiblen Material besteht oder eine solche flexible Beschichtung aufweist, um so den Kontakt mit der Kupplungsaufnahme herzustellen und zu halten.

Bei der Federanordnung ist es bevorzugt, wenn sie sich an einem Drehlager, beispielsweise an einem Lagerring, einer Anlaufscheibe, oder dergleichen, abstützt, mit dem die Drehmitnahmeeinrichtung an einem Grundkörper der Kupplungseinrichtung drehbar gelagert ist. Somit dreht die Federanordnung sozusagen mit. Es ist aber auch möglich, dass zwischen der Federanordnung und dem Drehmitnahmekörper und oder dem Drehübertragungsglied ein Drehlager vorhanden ist. Mit dem vorgenannten Lagerring ist beispielsweise ein Ring eines Kugellagers oder eines Wälzlagers gemeint.

Der mindestens eine Drehmitnahmekörper ist zweckmäßigerweise in der Kontaktstellung oder in der Ruhestellung festlegbar, beispielsweise verrastbar, wobei der Drehmitnahmekörper in der Ruhestellung mit der Kugeloberfläche fluchtet oder hinter die Kugeloberfläche zurückversetzt ist. Jedenfalls steht der Drehmitnahmekörper nicht oder nur unwesentlich vor die Kugeloberfläche vor, wenn er in der Ruhestellung ist.

Eine solche Verrastung kann beispielsweise als eine sogenannte Push-Push-Funktion realisiert sein. So kann beispielsweise der Drehmitnahmekörper durch einmaliges Drücken in seine Ruhestellung gebracht werden, durch ein weiteres Drücken in die Kontaktstellung vorfedern. Weiterhin ist es denkbar, dass beispielsweise ein Festlegeglied, insbesondere ein Splint oder dergleichen, zum Festlegen des Drehmitnahmekörpers in der Ruhestellung vorgesehen ist.

Zum Halten des Drehmitnahmekörpers in der Ruhestellung oder auch zum Freigeben in die Kontaktstellung ist zweckmäßigerweise eine Halteanordnung vorgesehen, beispielsweise die vorgenannte Rastanordnung. In der Ruhestellung steht der Drehmitnahmekörper weniger weit vor die Kugeloberfläche vor als in der Kontaktstellung, d.h. er fluchtet beispielsweise mit der Kugeloberfläche oder steht hinter diese zurück. Es ist aber auch denkbar, dass der Drehmitnahmekörper in der Ruhestellung noch immer etwas vor die Kugeloberfläche vorsteht, jedoch nicht soweit, wie in der Kontaktstellung.

Die Halteanordnung umfasst beispielsweise eine Herzkurve, wie man sie von Kugelschreibermechaniken kennt. Eine Beschreibung dazu findet sich beispielsweise im Gebrauchsmuster DE 70 15 045 oder auch der Offenlegungsschrift DE 146 16 07. In diesem Zusammenhang kann die Halteanordnung auch so getroffen sein, dass sie ein Weiterschalten des Drehmitnahmekörpers um die Drehachse ermöglicht, um beispielsweise einen Verschleiß des Drehmitnahmekörpers auszugleichen, wie beispielsweise in DE 70 15 045 beschrieben.

Die Halteanordnung kann auch ein Betätigungsglied oder Aktivierungsglied aufweisen, das eine vor die Kupplungseinrichtung, beispielsweise die Kugeloberfläche, vorstehende Betätigungsfläche aufweist. Beispielsweise beim Aufsetzen der Zugkugelkupplung oder durch Bedienereingriff wird die Betätigungsfläche betätigt, so dass das Betätigungsglied in eine Freigabestellung verstellt wird. In dieser Freigabestellung ermöglicht das Betätigungsglied eine Verstellung des Drehmitnahmekörpers in Richtung der Kontaktstellung, während in einer Blockierstellung des Betätigungsgliedes der Drehmitnahmekörper in der Ruhestellung gehalten wird. Nun ist es möglich, dass das Betätigungsglied unmittelbar auf den Drehmitnahmekörper wirkt, d.h. die Freigabe oder Blockierung des Drehmitnahmekörpers selbst bewirkt. Bevorzugt wirkt das Betätigungsglied jedoch auf die Rastanordnung, beispielsweise das Rastglied, mit der das Drehübertragungsglied und der mindestens eine Drehmitnahmekörper miteinander verrastbar sind. Es ist auch möglich, dass das Betätigungsglied die Rastaufnahme verstellt, beispielsweise einen Boden derselben verstellt. Beispielsweise ermöglicht das Betätigungsglied in der Freigabestellung, dass das Rastglied in der zweckmäßigerweise eine Drehmitnahme realisierenden Rastaufnahme positioniert ist, während das Betätigungsglied in der Blockierstellung das Rastglied, beispielsweise die vorgenannte Kugel, in einen Blockieraufnahme einrasten lässt.

Die geometrische Gestalt der Kugeloberfläche umfasst eine vom Kugelträger abgewandte Oberseite, beispielsweise eine Stirnseite oder eine Abflachung, wie bei Anhängekupplungen üblich, und eine sich zwischen der Oberseite und dem Kugelträger erstreckende Umfangsmantelfläche. Nun ist es möglich, einen oder mehrere der Drehmitnahmekörper an verschiedenen Stellen einer solchen Kupplungskugel anzuordnen. Beispielsweise ist ein Drehmitnahmekörper vorgesehen, der in der Kontaktstellung vor die Oberseite zur Erfassung einer relativen Verdrehung der Kupplungsaufnahme zu der Kupplungskugel um eine im Wesentlichen vertikale Achse vorsteht.

Aber auch am sozusagen äquatorialen Umfang, jedenfalls an einem Zwischenbereich zwischen der Oberseite und der Unterseite der Kupplungskugel, kann ein Drehmitnahmekörper vorgesehen sein. Bevorzugt ist der Drehmitnahmekörper an einer in Fahrtrichtung vorderen Seite der Kugelmanteloberfläche oder Umfangsmantelfläche vorgesehen. In der Regel drückt nämlich eine Verriegelung oder Verriegelungsbacke der Zugkugelkupplung auf die Fahrtrichtung hintere Umfangsmantelfläche der Kupplungskugel.

Der vor die Oberseite vorstehende Drehmitnahmekörper ist zwar vorzugsweise für eine relative Verdrehung der Kupplungsaufnahme zur Kupplungskugel um eine im Wesentlichen vertikale Achse (bei Gebrauch der Anhängerkupplung) vorgesehen. Es ist aber auch möglich, dort einen Drehmitnahmekörper vorzusehen, der eine dazu winkelige Verdrehung erfassen kann, beispielsweise um eine im Wesentlichen horizontale Achse. Selbstverständlich gilt dasselbe auch für den Drehmitnahmekörper, der in der Kontaktstellung vor die Umfangsmantelfläche vorsteht. Dieser dient zwar bevorzugt dazu, eine Verdrehung der Kupplungsaufnahme zur Kupplungskugel um eine im Wesentlichen vertikale Achse zu erfassen. Es ist aber auch möglich, dass der Drehmitnahmekörper eine Verdrehung um eine im Wesentlichen horizontale Achse erfasst bzw. dazu vorgesehen ist.

Der Drehmitnahmekörper kann völlig unterschiedliche Geometrien aufweisen. Bevorzugt ist der Drehmitnahmekörper beispielsweise durch ein Kappenelement, durch einen stirnseitig auf das Drehübertragungsglied angebrachten Stirnseitenkörper oder dergleichen gebildet. Es ist aber auch möglich, dass der Drehmitnahmekörper beispielsweise durch ein Rad, ein Flügelsegment, einen vorstehenden Stift oder dergleichen mehr gebildet wird. Weiterhin ist es denkbar, den Drehmitnahmekörper beispielsweise als flexiblen Riemen auszugestalten, der seinerseits wiederum das Übertragungsglied und/oder unmittelbar das vorher bereits erläuterte Erregerglied, beispielsweise einen Erregermagneten, antreibt.

Der Drehmitnahmekörper ist in einer bevorzugten Ausführungsform der Erfindung ein Kugelsegment oder als eine Art Kugelkappe ausgestaltet. Die Kupplungskugel hingegen ist keine Vollkugel, sondern sozusagen eine Teilkugel. Das Kugelsegment ist nunmehr so getroffen, dass es die Teilkugel insgesamt zu einer Gesamtkugel ergänzt.

Dazu ist wieder zu betonen, dass die Gesamtkugel selbstverständlich nicht allseitig kugelig sein muss, sondern beispielsweise in sich üblicher Weise an ihrer Unterseite einen Rand oder einen Bund aufweist und an ihrer Oberseite abgeflacht sein kann. Selbstverständlich bildet das Kugelsegment diese Abflachung zweckmäßigerweise ebenfalls aus, wenn es dessen vertikal stirnseitigen, beim Fahrbetrieb der Anhängekupplung in der Regel oberseitigen Bereich umfasst oder bildet.

An dieser Stelle sei bemerkt, dass das Kugelsegment selbstverständlich auch an einer Seitenfläche der Gesamtkugel vorgesehen sein kann.

Weiterhin ist festzuhalten, dass das Kugelsegment und die Teilkugel zweckmäßigerweise mit geringem Abstand miteinander verbunden sind, so dass insgesamt eine normgerechte kugelige Gestalt gegeben ist.

Das Kugelsegment bildet zweckmäßigerweise wie bereits erwähnt eine vertikal obere Stirnseite der Gesamtkugel.

Bevorzugt ist es, wenn das Kugelsegment an einer äquatorial oberen Seite der Gesamtkugel angeordnet ist.

Bei dieser Ausführungsform sowie aber auch bei einer anderen Positionierung des Kugelsegmentes an der Gesamtkugel, beispielsweise einer beim Fahrbetrieb der Anhängekupplung horizontal schrägen Position, ist es vorteilhaft, wenn das Kugelsegment bzw. der Drehmitnahmekörper einen kleineren Anteil an der Kugeloberfläche der Gesamtkugel hat als vorteilhaft die feststehende Teilkugel oder Grundkugel.

Zwischen einer dem Kugelsegment zugewandten Stirnseite der Teilkugel und dem Kugelsegment ist zweckmäßigerweise eine zusätzliche Lagerung vorhanden, z.B. ein Gleitlager, ein Wälzlager oder dergleichen. Weiterhin ist es vorteilhaft, wenn ein Dichtring oder sonstige Dichtmittel vorhanden sind. Eine besonders bevorzugte Ausführungsform sieht vor, dass das jeweilige Gleit- und Wälzlager im Innenraum des Dichtringes oder einer sonstigen, zweckmäßigerweise ringförmigen Richtung angeordnet ist und so vor Umwelteinflüssen geschützt ist.

Eine bevorzugte Ausführungsform sieht vor, dass das den Drehmitnahmekörper bildende Kugelsegment mit dem vorbeschriebenen Drehübertragungsglied drehfest gekoppelt ist, beispielsweise verstiftet oder verklebt. Eine vorteilhafte Anordnung sieht dabei vor, dass der Drehübertragungsglied eine Drehlagerung des Kugelsegmentes gegenüber beim Fahrbetrieb horizontal wirkenden Kräften bereitstellt, während das Lager zwischen dem Kugelsegment und der Teilkugel nach vertikal unten, das heißt in Richtung der Drehachse wirkende Kräfte aufnimmt. Es ist auch möglich, dass das Drehübertragungsglied den Drehmitnahmekörper bezüglich Kräften längs und quer zur Drehachse, z.B. vertikal und horizontal, lagert.

Der Drehmitnahmekörper besteht zweckmäßigerweise aus einem Antirutsch-Material oder ist mit einem solchen beschichtet. Als Antirutsch-Material hat sich zum Beispiel Nitrilkautschuk als vorteilhaft herausgestellt. Es versteht sich, dass der Drehmitnahmekörper auch Verstärkungen und dergleichen mehr aufweisen kann, beispielsweise Metallspäne oder Fasern.

Der Drehmitnahmekörper kann auch eine Formschlusskontur, beispielsweise eine Formschlussaufnahme und/oder einen Formschlussvorsprung (oder auch mehrere jeweils davon) zur Herstellung eines Formschlusses mit der Kupplungsaufnahme aufweist.

Das Antirutschmaterial trägt dazu bei, dass die Reibung zwischen Drehmitnahmekörper und Kupplungsaufnahme größer ist als eine innere Reibung der Drehmitnahmeeinrichtung bezüglich der Kupplungseinrichtung.

Es versteht sich, dass auch ein kraftschlüssiger Halt möglich ist. Dazu ist zweckmäßigerweise vorgesehen, dass die Drehmitnahmeeinrichtung einen oder mehrere Magneten aufweist, die den Drehmitnahmekörper sozusagen in Richtung der Kupplungsaufnahme ziehen, die in der Regel ferromagnetisch ist. Beispielsweise hat die Drehmitnahmeeinrichtung eine Ausnehmung, in die ein Magnet eingesetzt ist. Es versteht sich, dass oberhalb des Magneten zweckmäßigerweise noch eine Antirutsch-Beschichtung oder Fläche, eine Beschichtung aus einem elastischen Material oder dergleichen, vorgesehen sein kann, so dass der Magnet nicht unmittelbar an die Kupplungsaufnahme herangezogen wird. Jedenfalls ermöglicht der Magnet einen Kraftschluss zwischen Drehmitnahmeeinrichtung und Kupplungsaufnahme, so dass die Drehmitnahmeeinrichtung bei einer Drehung der Kupplungsaufnahme bezüglich der Kupplungseinrichtung mitgenommen wird. An Stelle eines einzelnen Magneten könnten aber auch magnetische Partikel in ein zweckmäßigerweise elastomeres Material eingebettet sein, beispielsweise das vorgenannte Antirutsch-Material.

Die Sensoranordnung ist zweckmäßigerweise in einem Schutzgehäuse angeordnet. Das Schutzgehäuse ist beispielsweise aus einem Kunststoffmaterial, insbesondere aus einem faserverstärkten Kunststoffmaterial, beispielsweise glasfaserverstärktem Kunststoffmaterial. Bevorzugt ist das Kunststoffgehäuse aus Polyamid (PA), wobei hier eine Glasfaserverstärkung (GF) möglich ist.

Die Sensoranordnung kann optional auch zusätzlich zu dem Drehwinkel-Sensor signalverarbeitende Komponenten enthalten, beispielsweise eine das Ausgangssignal des Sensors verarbeitende, ein Sensorsignal erzeugende Verarbeitungseinheit. Weiterhin ist es möglich, dass die Sensoranordnung einen Buskoppler enthält.

Besonders bevorzugt ist ein modulares Konzept derart, dass beispielsweise bei der Sensoranordnung ein Anschluss für ein Zusatzmodul vorhanden ist, wobei das Zusatzmodul weitere Signalverarbeitungsfunktionen realisieren kann. So ist es beispielsweise denkbar, dass die Sensoranordnung als solche den Drehwinkelsensor sowie eine Signalverarbeitungseinheit zur Erzeugung des Sensorsignales enthält, das an einem Ausgang der Sensoranordnung bereitgestellt wird. An diesen Ausgang könnte dann ein weiteres Modul, beispielsweise in Gestalt des Buskopplers oder dergleichen, vorgesehen oder anschließbar sein.

Nachfolgend werden Ausführungsbeispiele anhand der Zeichnung erläutert. Es zeigen
- Figur 1: eine teilweise geschnittene Seitenansicht einer Kombination einer erfindungsgemäßen Anhängekupplung mit einer Zugkugelkupplung,
- Figur 2: eine Explosionsdarstellung
- Figur 3: eine Schnittdarstellung entlang einer Schnittlinie A-A der Anhängekupplung gemäß Figur 1,

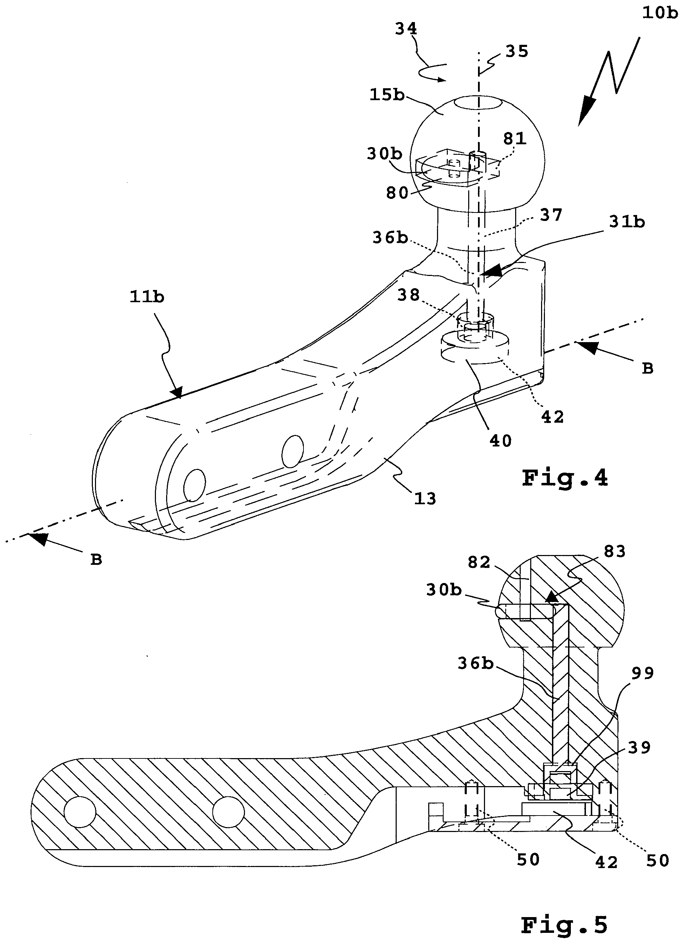

- Figur 4: eine perspektivische Schrägdarstellung eines zweiten Ausführungsbeispiels einer erfindungsgemäßen Anhängekupplung, das in
- Figur 5: entlang einer Schnittlinie B-B gemäß Figur 4 geschnitten dargestellt ist

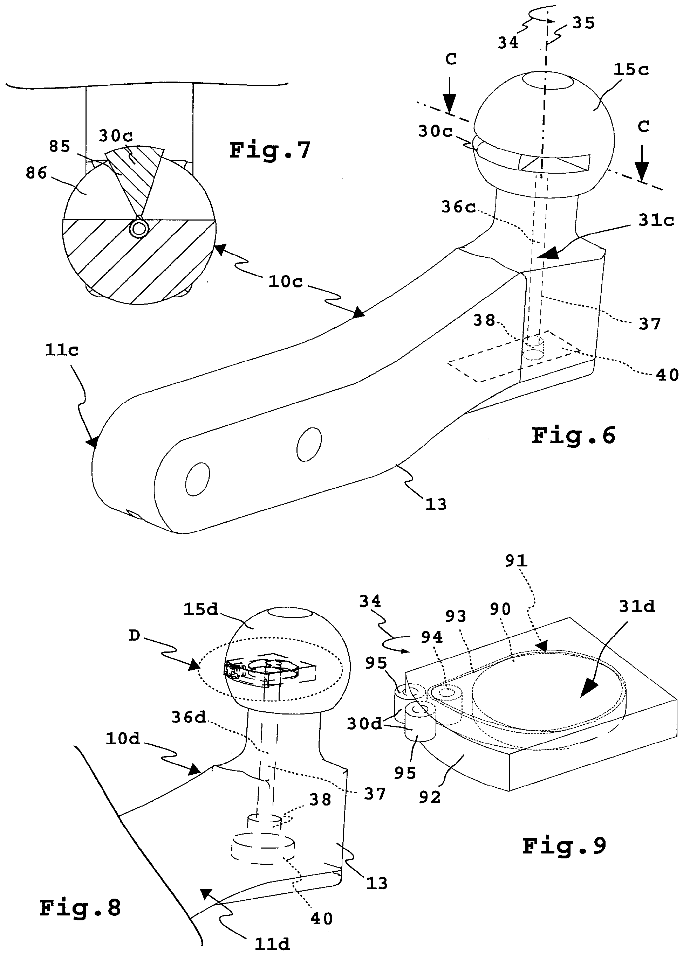

- Figur 6: eine perspektivische Darstellung eines dritten Ausführungsbeispiels einer erfindungsgemäßen Anhängekupplung, von der in
- Figur 7: ein Schnitt entlang einer Schnittlinie C-C gezeigt ist,
- Figur 8: eine vierte erfindungsgemäße Anhängekupplung, und
- Figur 9: ein schematisch dargestelltes Drehmitnahmemodul etwa entsprechend einem Ausschnitt D in Figur 8.
- Figur 10: eine Querschnittsansicht einer fünften Anhängekupplung mit einer Herzkurve zwischen ihren Drehmitnahmekörper und ihrem Drehübertragungsglied,
- Figur 11a: eine Querschnittsansicht einer sechsten Anhängekupplung mit einem Betätigungsglied zum Halten des Drehmitnahmekörper in einer Ruhestellung,
- Figur 11b: die Anhängekupplung gemäß Figur 11a, jedoch mit dem Drehmitnahmekörper in Kontaktstellung,
- Figur 12: den Drehmitnahmekörper der Anhängekupplung gemäß Figur 11a, 11b,
- Figur 13: ein siebtes Ausführungsbeispiel einer erfindungsgemäßen Anhängekupplung in Querschnittsansicht etwa einer Schnittlinie A-A, in
- Figur 14: ,in der die Anhängekupplung einzeln perspektivisch dargestellt ist, und
- Figur 15: eine Teil-Querschnittsansicht der Anhängekupplung aus den Figuren 14 und 15.

Bei den nachfolgenden Ausführungsbeispielen sind ähnliche oder gleichartige Komponenten mit denselben Bezugsziffern versehen. Zur Verdeutlichung von Unterschieden sind teilweise die Kleinbuchstaben a-g hinzugefügt.

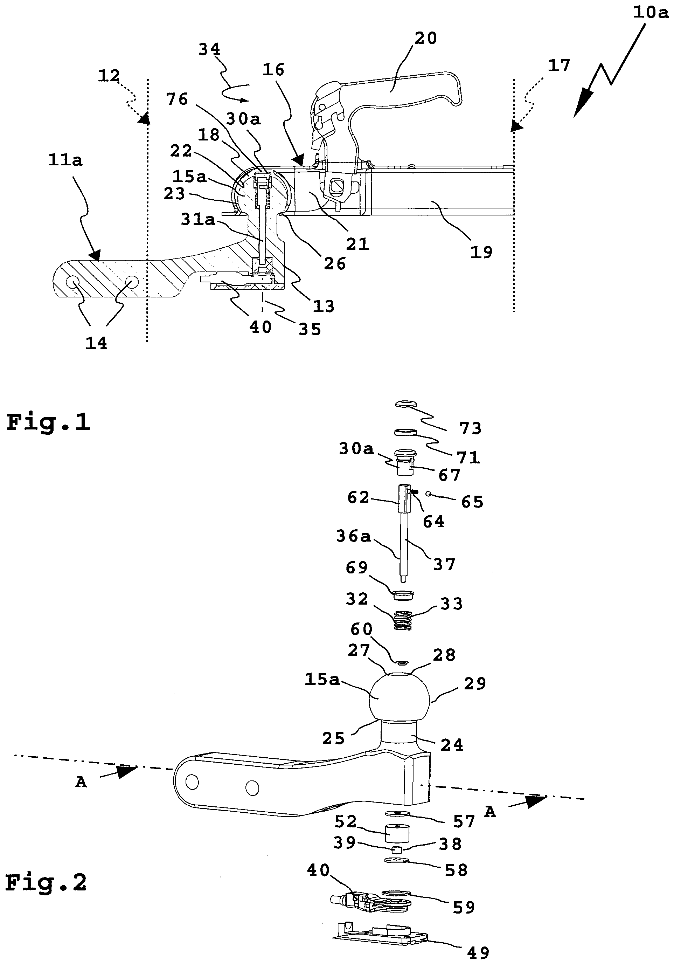

Die in der Zeichnung dargestellten Anhängekupplungen 10a-10g weisen Kupplungseinrichtungen 11a-11g auf, die zur Befestigung an einem Zugfahrzeug 12, beispielsweise einem Personenkraft-Zugfahrzeug, geeignet sind. Dazu sind an Kugelträgern 13 der Anhängekupplungen 10a-10g beispielsweise zwei quer verlaufende Bohrungen 14 vorgesehen, mit denen die Kupplungseinrichtung 11a-11g beispielsweise an einem in der Zeichnung nicht dargestellten Querträger des Zugfahrzeugs 12 angeschraubt werden kann. Bei der nachfolgenden Beschreibung wird von einer starren, dauerhaft am Zugfahrzeug 12 angeordneten Anhängekupplung gesprochen. Es versteht sich, dass die Kupplungseinrichtungen 11a-11g nur beispielhaft für Kupplungseinrichtungen stehen, die beispielsweise vom Zugfahrzeug 12 entfernbar oder an diesem beweglich gelagert sind. Beispielsweise könnten die Kugelträger 13 schwenkbeweglich und/oder schiebebeweglich bezüglich des Zugfahrzeuges 12 gelagert sein, um zwischen einer Arbeitsstellung, bei der die Anhängekupplung wie in Figur 1 gezeigt hinter das Heck des Zugfahrzeugs 12 vorsteht, und einer Ruhestellung verstellt zu werden, bei der vorzugsweise vorgesehen ist, dass die Kupplungseinrichtung 11a-11g in Richtung einer Karosserie des Zugfahrzeuges 12 weg bewegt ist, beispielsweise unter und/oder hinter einen Heckstoßfänger. Das spielt jedoch bezüglich der Funktionsweise der erfindungsgemäßen Anhängekupplungen 10a-10g keine Rolle.

Vielmehr steht die nachfolgend im Detail erläuterte, vorteilhafte Anordnung und Ausgestaltung der Sensoranordnung sowie deren Erfassung eines Drehwinkels im Vordergrund.

Am vom Zugfahrzeug 12 abgewandten Endbereich des beispielsweise als Arm ("Kupplungsarm") ausgestalteten Kugelträgers 13 befindet sich eine Kupplungskugel, die zum drehbaren Lagern einer Zugkugelkupplung 16 eines Anhängers 17 dient. Die Kupplungskugel 15a-15g greift in eine Kupplungsaufnahme 18 der Zugkugelkupplung 16 in an sich bekannter Weise ein. Die Zugkugelkupplung 16 ist beispielsweise an einer Deichsel 19 des Anhängers 17 angeordnet und umfasst einen Schwenkhebel 20 zum Betätigen eines Haltebackens 21 zwischen einer Haltestellung (siehe Figur 1) und einer Lösestellung, in der die Kupplungsaufnahme 18 derart weit ist, dass die Zugkugelkupplung 16 von der Kupplungskugel 15a-15g abgenommen werden kann.

In der Haltestellung liegen eine Innenfläche 22 der Kupplungsaufnahme 18 und eine Kugeloberfläche 23 der Kupplungskugel 15a-15g einander gegenüber und zumindest partiell aneinander an. Mithin kann also die Innenfläche 22 an der Kugeloberfläche 23 entlang gleiten. Die Kupplungsaufnahme 18 bildet also eine Kugelpfanne, in der die Kupplungskugel 15a-15g aufgenommen ist und in der Art eines Kugelgelenks schwenken kann. Dies ist an sich bekannt.

Die Kupplungskugel 15a-15g ist auf einer Stütze 24 angeordnet, die nach oben von dem Kugelträger 13 absteht. Die Kupplungskugel 15a-15g hat an ihrer Unterseite einen Rand 25, der von einem Untergreifvorsprung 26 der Zugkugelkupplung 16 untergriffen wird.

Bei den Ausführungsbeispielen ist eine einstückige Kupplungseinrichtung 11a-11g dargestellt, derart, dass der Kugelträger 13, die Stütze 24 und die darauf angeordnete Kupplungskugel 15a-15g einstückig sind. Beispielsweise werden diese Komponenten von einem einzigen Guss- oder Schmiedeteil gebildet. Es versteht sich, dass auch eine mehrteilige Bauweise möglich ist, bei der die Komponenten 13 und 15a-15g sowie zweckmäßigerweise 24 miteinander verschraubt, verschweißt oder in sonstiger Weise miteinander fest verbunden sind.

Zwischen dem Rand 25 und einer Oberseite 27 einer jeweiligen Kupplungskugel 15a-15g, die vorliegend abgeflacht ist und eine Stirnseite 28 bildet, befindet sich eine Umfangsmantelfläche 29 der jeweiligen Kugeloberfläche 23.

Sowohl die Oberseite 27, insbesondere die Stirnseite 28, als auch die Umfangsmantelfläche 29 sowie nicht dargestellter Weise auch der Rand 25 eignen sich zur Anordnung erfindungsgemäßer Drehmitnahmekörper, wie nachfolgend noch beschrieben wird:
Bei den Anhängekupplungen 10a-10g sind Drehmitnahmekörper 30a-30g von Drehmitnahmeeinrichtungen 31a-31g für einen Drehmitnahmekontakt mit dem Kupplungsmaul bzw. der Kupplungsaufnahme 18 der Zugkugelkupplung 16 vorgesehen. In einer Kontaktstellung K stehen die Drehmitnahmekörper 30a-30g jedenfalls vor die Kugeloberfläche 23 vor.

Der Drehmitnahmekörper 30a steht vor die Stirnseite 28 der Kupplungskugel 15a vor, während die Drehmitnahmekörper 30b-30d vor die Umfangsmantelfläche 29 vorstehen. Der Drehmitnahmekörper 30a ist in die Kontaktstellung K federbelastet, wofür eine Federanordnung 32 mit einer Schraubenfeder 33 vorgesehen ist. Somit hält sozusagen die Federanordnung 32 den Drehmitnahmekörper 30a in Berührkontakt mit der Kupplungsaufnahme 18. Die Drehmitnahmekörper 30b-30d hingegen sind in sich elastisch oder weisen eine elastische Beschichtung auf, derart, dass sie bei angekuppelter Zugkugelkupplung 16 stets in Drehmitnahmekontakt mit der Kupplungsaufnahme 18 sind.

Nun könnte die Anordnung der Drehmitnahmekörper 30b-30c so getroffen sein, dass sie auch in Kontakt mit den Haltebacken 21 gelangen. Bevorzugt ist jedoch eine Anordnung wie in der Zeichnung dargestellt, dergestalt, dass die Drehmitnahmekörper 30b-30d in Richtung des Zugfahrzeuges 12 orientiert sind, d.h. an einer beim Betrieb mit der Zugkugelkupplung 16 von dem Haltebacken 21 abgewandten Seite mit der Kupplungsaufnahme 18 in Drehmitnahmekontakt stehen. Das hält die mechanische Beanspruchung gering und dient zudem zu einer möglichst optimalen Übertragung und Ermittlung eines Drehwinkels 34, den die Zugkugelkupplung 16, mithin also auch der Anhänger 17, bezüglich des Kugelträgers 13, mithin also des Zugfahrzeugs 12, einnimmt.

Bei den Ausführungsbeispielen kommt es hier im Wesentlichen auf eine Art Gierwinkel bzw. Winkel um eine beim Betrieb des Gespanns aus Zugfahrzeug 12 und Anhängers 17 im Wesentlichen vertikale Drehachse 35 an, die man auch als Schwenkachse bezeichnen kann, wobei selbstverständlich auch eine Schwenkwinkelerfassung oder Drehwinkelerfassung um eine beim Betrieb des Gespanns horizontale Achse ("Rollwinkelerfassung") oder schräg geneigte Achse erfindungsgemäß möglich wäre, was jedoch bei den Ausführungsbeispielen nicht der Fall ist.

Die Drehmitnahmeeinrichtungen 31a-31g weisen Drehübertragungsglieder 36a-36g auf, die jeweils eine Drehwelle 37 aufweisen oder als solche ausgestaltet sind. Die Drehübertragungsglieder 36a-36g sind jeweils um die Drehachse 35 drehbar an der Kupplungseinrichtung 11a-11g mittels einer zweckmäßigerweise eine geringe innere Reibung aufweisenden Lageranordnung 99 gelagert und durchsetzen zumindest teilweise die Kupplungskugel 15a-15g bzw. dringen in diese ein. Weiterhin ist bei den Ausführungsbeispielen die Anordnung so getroffen, dass die Drehübertragungsglieder 36a-36g auch die Stützen 24 und weiterhin das freie, die Kupplungskugel 15a-15g tragende Ende der Kugelträger 13 durchsetzen, an deren Unterseite eine Sensoranordnung 40 angeordnet ist, die zur Erfassung des Drehwinkels 34 ausgestaltet und ausgebildet ist.

Die Sensoranordnung 40 ist als ein Sensormodul 41 ausgestaltet (ein diskreter Aufbau wäre alternativ möglich) und umfasst einen Drehwinkelsensor 42, beispielsweise einen induktiven Sensor, einen magnetoresistiven Sensor (AMR oder GMR), einen Hall-Sensor oder dergleichen. Der Drehwinkelsensor 42 ist also ein magnetisch arbeitender Sensor. Selbstverständlich könnte man anstelle eines magnetischen Sensors auch einen kapazitiven, einen optischen Sensor oder dergleichen andere, einen Drehwinkel erfassende Sensoren einsetzen. Zur Ansteuerung bzw. Erregung des Drehwinkelsensors 42 dient ein Erregerglied 38, das am jeweiligen Drehübertragungsglied 36a-36g angeordnet ist. Beispielsweise handelt es sich bei dem magnetisch arbeitenden Drehwinkelsensor 42 um einen Erregermagneten 39. Mithin ist also die Anordnung so getroffen, dass das bewegliche Element vom Erregerglied 38 gebildet wird, während der Drehwinkelsensor 42 ortsfest an der Kupplungseinrichtung 11a-11g angeordnet ist.

Das Drehübertragungsglied 36a-36g ermöglicht es nunmehr, dass der Drehwinkel mechanisch aus dem Bereich der Kupplungskugel 15a-15g an den unteren Bereich einer jeweiligen Kupplungseinrichtung 11a-11g übertragen wird, wo die Sensoranordnung 40 angeordnet ist.

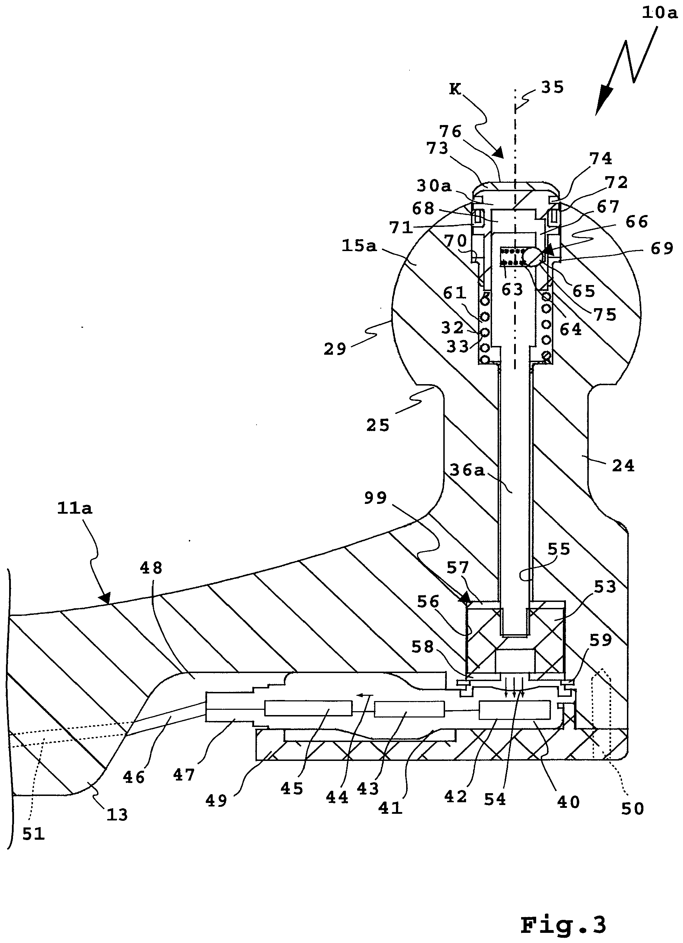

Die Sensoranordnung 40 ist im Zusammenhang mit der Anhängekupplung 10a-10g, insbesondere in Figur 3, im Detail erkennbar. Bei den Anhängekupplungen 10b-10d hingegen ist die Sensoranordnung 40 nur schematisch dargestellt, arbeitet aber im Prinzip gleich.

Der Drehwinkelsensor 42 steuert eine Verarbeitungseinheit 43 mit an, d.h. der Ausgang des Drehwinkelsensors 42 ist mit dem Eingang der Verarbeitungseinheit 43 verbunden. Die Verarbeitungseinheit 43 erzeugt ein Drehwinkelsignal 44 zur Übertragung an ein Bordnetz des Zugfahrzeugs 12. Beispielsweise könnte für das Drehwinkelsignal 44 eine entsprechende Signalleitung vorgesehen sein, die von der Sensoranordnung 40 zum Bordnetz des Zugfahrzeugs 12 führt. Bevorzugt ist jedoch eine Busankopplung, d.h. das Zugfahrzeug 12 hat einen Datenbus, z.B. einen CAN-Bus, einen LIN-Bus oder dergleichen, mit dem die Sensoranordnung 40 verbindbar oder wie beim Ausführungsbeispiel gemäß Figur 1 verbunden ist. Die Verarbeitungseinheit 43 speist das Drehwinkelsignal 44 beispielsweise in einen Buskoppler 45 ein, der seinerseits wiederum zur Anbindung an den vorgenannten Datenbus dient. Die Sensoranordnung 40 ist beispielsweise über eine Leitung 46 mit dem Bordnetz des Zugfahrzeugs 12 verbunden. Die Leitung 46 umfasst beispielsweise eine Busleitung zur Anbindung an den Fahrzeug-Datenbus, mit der seinerseits wiederum der Buskoppler 45 verbunden ist.

Wie bereits angedeutet, ist die Sensoranordnung 40 geschützt an der Unterseite des Kugelträgers 13 angeordnet. Beispielsweise sind der Drehwinkelsensor 42, die Verarbeitungseinheit 43 und der Buskoppler 45 in einem Schutzgehäuse 47 angeordnet, das die vorgenannten Komponenten kapselt. Diese Komponenten könnten selbstverständlich auch durch eine einzige elektrische Baueinheit gebildet sein, beispielsweise durch einen ASIC (Application Specific Integrated Circuit).

Mithin kapselt also das Schutzgehäuse 47 die elektrischen Komponenten der Sensoranordnung 40. An dieser Stelle sei bemerkt, dass selbstverständlich zu deren Kapselung auch ein Verguss möglich ist. Jedenfalls ist es vorteilhaft, wenn das Sensormodul 41 als Ganzes an der Anhängekupplung 10a-10g montierbar ist.

Weiterhin trägt zum Schutz der Sensoranordnung 40 bei, dass eine Aufnahme 48 an der Kupplungseinrichtung 11a-11g aufgenommen ist. Die Aufnahme 48 wird von einem Deckel 49 abgedeckt. Mithin entsteht dadurch eine Art geschlossener Schutzraum, in dem die Sensoranordnung 40 angeordnet ist. Der Deckel 49 ist beispielsweise mittels Schrauben 50 an den Kugelträger 13 angeordnet. Weiterhin ist die Leitung 46 geschützt geführt. Beispielsweise ist eine Bohrung oder wie beim Ausführungsbeispiel ein Leitungskanal 51 vorgesehen, der sich vom Aufnahmebereich für die Sensoranordnung 40 in Richtung des fahrzeugseitigen Endes der Kupplungseinrichtung 11a-11g erstreckt. Vorläufig verläuft der Leitungskanal 51 an der Unterseite des Kugelträgers 13, in dessen Längserstreckungsrichtung und ist unterseitig offen. Dies ermöglicht eine einfache Montage. Selbstverständlich könnte auch eine Bohrung oder ein ansonsten geschlossener Kanal vorgesehen sein, um eine Verbindungsleitung zwischen dem Bordnetz eines jeweiligen Zugfahrzeuges und einer erfindungsgemäß arbeitenden Sensoranordnung herzustellen.

Das Erregerglied 38 ist vorteilhaft in einer Abschirmung 52 aufgenommen. Die Abschirmung 52 befindet sich an dem der Sensoranordnung 40 zugewandten Endbereich des Drehübertragungsgliedes 36a-36g. Vorliegend ist die Abschirmung 52 beispielsweise durch einen Abschirmkörper 53 gebildet, der einerseits das freie Ende der Drehwelle 37 aufnimmt, z.B. mit einer Steck- oder Schraubaufnahme, und andererseits eine zentrale Aufnahme für den Erregermagneten 39 umfasst. Der Erregermagnet 39 steht also nicht vor eine der Sensoranordnung 40 zugewandte Seite der Abschirmung 52 vor, sondern ist in dieses sozusagen versenkt oder in dieser vertieft aufgenommen. Somit ist also der Erregermagnet 39 von einer Umfangswand des Abschirmkörpers 53 umgeben, so dass sein Magnetfeld nicht durch die Umgebung gestört wird, insbesondere nicht durch das magnetische Material der Kupplungseinrichtung 11 beeinflusst wird. Vielmehr gelangt sein Magnetfeld 54 direkt auf den Drehwinkelsensor 42, der dem Erregerglied 38 gegenüberliegt.

Es versteht sich, dass anstelle oder in Ergänzung der Abschirmung 52 auch Feldleitmittel vorgesehen sein können, die das Magnetfeld 54 in Richtung des Drehwinkelsensors 42 lenken. Weiterhin ist es auch im Rahmen der Erfindung zu sehen, wenn sonstige Abschirmungsmittel für ein Erregerglied vorgesehen sind, beispielsweise auch Dichtungen, Kapselgehäuse oder dergleichen, um das Erregerglied vor Umwelteinflüssen zu schützen.

Weiterhin ist noch zur Sensoranordnung 40 nachzutragen, dass diese selbstverständlich auch ohne das Schutzgehäuse 47 einen optimalen Schutz genießen kann. Beispielsweise könnte der Aufnahmeraum oder die Aufnahme 48 so durch den Deckel 49 abgedeckt sein, dass ein vollständiger - mit Ausnahme der Leitungszuführung für die Leitung 46 - geschlossener Schutzraum für den jeweiligen Drehwinkelsensor besteht. Weiterhin ist es denkbar, den Drehwinkelsensor von unten her an der jeweiligen Kupplungseinrichtung zu montieren und anschließend beispielsweise durch Verguss oder eine sonstige Schutzmaßnahme zu schützen.

Bevorzugt ist aber das modulare Konzept, bei dem die Sensoranordnung 40 auch nachträglich an der jeweiligen Anhängekupplung 10a-10g montierbar ist.

Die Drehwellen 37 sind in einem Lagerkanal 55 angeordnet, der entlang der Drehachse 35 zwischen einer Unterseite des Kugelträgers 13, durch die Stütze 24 hindurch bis zur Kupplungskugel 15a-15g verläuft.

An dem unteren Bereich des Lagerkanals 55 ist vorzugsweise eine Ausnehmung 56 angeordnet, die unter anderem den Abschirmkörper 53 aufnimmt. Mithin ist also der Lagerkanal 55 sozusagen an seinem unteren, der Sensoranordnung 40 zugewandten Bereich aufgeweitet.

Die Ausnehmung 56 dient weiterhin zur Aufnahme einer Lagerscheibe 57, einem sogenannten Anlaufring oder einer Anlaufscheibe, zur drehbaren Lagerung der Drehmitnahmeeinrichtung 31a-31g bezüglich der Kupplungseinrichtung 11a-11g. Mithin durchdringt die Drehwelle 37 die Lagerscheibe 57, die am Boden der Ausnehmung 56 anliegt und an der der Abschirmkörper 53 drehbar gelagert ist.

Der Abschirmkörper 53, der sozusagen ein Lagerende des Drehübertragungsglieds 36a darstellt, wird durch einen Sicherungsring 59 in der Ausnehmung 56 gehalten. Zwischen dem Sicherungsring 59 und dem Abschirmkörper 53 ist weiterhin eine Dichtung 58 zweckmäßig, jedoch nicht unbedingt erforderlich.

Es versteht sich, dass anstelle und/oder in Ergänzung der Dichtung 58 auch ein Drehlager vorgesehen sein könnte. Dieses Drehlager könnte wie die Lagerscheibe 57 als Gleitlager ausgestaltet sein, wobei selbstverständlich für beide dieser Lager auch Wälzlager, insbesondere Kugel- oder Rollenlager, oder dergleichen andere, jeweils erforderliche Lagereigenschaften bereitstellende Lagereinrichtungen vorgesehen sein könnten.

Auch am anderen Ende des Drehübertragungsgliedes 36a sind Lagermaßnahmen getroffen. So stützt sich beispielsweise die Federanordnung 32 an einer Lagerscheibe 60 ab. Die Lagerscheibe 60 ist am Boden einer Ausnehmung 61 vorgesehen, die unter anderem den Drehmitnahmekörper 30a aufnimmt.

Die Ausnehmungen 61, 56 sind an einander entgegengesetzten Seiten des Lagerkanales 55 vorgesehen. Die Ausnehmungen 56, 61 sind zweckmäßigerweise zylindrisch, wobei auch andere Innenkonturen selbstverständlich möglich sind.

Das Drehübertragungsglied 36a ist also mit den Lagern 57 und 60 drehbar an der Kupplungseinrichtung 11 gelagert.

Das Lager 57, an dem sich der Abschirmkörper 53 abstützt, verhindert ein Ausziehen des Drehübertragungsglieds 36a in Richtung der Kugel-Oberseite 27.

An seiner dem Drehmitnahmekörper 30a zugewandten Seite hat das Drehübertragungsglied 36a einen Haltekopf 62. Der Haltekopf 62 ist im Wesentlichen zylindrisch. Der Haltekopf 62 hat einen Federkanal 63, in dem eine Feder 64 sowie eine Kugel 65 aufgenommen sind. Die Feder 64 stützt sich einerseits am Boden des Federkanals 63 und andererseits an der Kugel 65 ab, so dass diese nach radial außen federbelastet ist. Die Kugel 65 bildet einen Bestandteil einer Rastanordnung 66, die weiterhin eine Rastaufnahme 67 umfasst. Mithin ist also die Kugel 65 in Richtung der Rastaufnahme 67 belastet. Beim Ausführungsbeispiel verläuft der Federkanal 63 radial bezüglich der Drehachse 35. Somit ist also die Kugel 65 bezüglich des Drehübertragungsglieds 36a nach radial außen belastet.

Die Rastanordnung 66 dient zur Verrastung des Drehmitnahmekörpers 30a mit dem Drehübertragungsglied 36a. Die Rastaufnahme 67 ist als eine Längsnut ausgestaltet, die zumindest im Wesentlichen parallel zur Drehachse 35 verläuft. Die Rastaufnahme 67 ist beispielsweise an der Innenseite einer Steckaufnahme 68 des Drehmitnahmekörpers 30a ausgebildet. Der Haltekopf 62 der Drehwelle 37 ist in die Steckaufnahme 68 eingesteckt. Beim Einstecken wird die Kugel 65 zunächst nach radial innen in Richtung des Federkanals 63 verdrängt. Wenn sich der Federkanal 63 und die Rastaufnahme 67 gegenüberstehen, drückt die Feder 64 die Kugel 65 nach außen vor einen Außenumfang des Haltekopfes 62 vor, so dass sie in die Rastaufnahme 67 einrastet. Auf diesem Wege ist also ein einfaches Einrasten bzw. Montieren des Drehmitnahmekörpers 30a an dem Drehübertragungsglied 36a möglich.

Zudem wird dadurch eine Drehfestigkeit erzielt. Die Rastaufnahme 67 ist nämlich etwas schmaler als der Durchmesser der Kugel 65. Dadurch liegt die Kugel 65 stets bezüglich des Drehwinkels 34 an den umfangsseitigen Seitenflanken der Rastaufnahme 67 an, so dass zwischen dem Drehmitnahmekörper 30a und dem Drehübertragungsglied 36a eine optimale Drehfestigkeit vorhanden ist. Zugleich können die beiden Körper 36a, 30a aber auch außer Eingriff gelangen, beispielsweise durch Ziehen des Drehmitnahmekörpers 30a aus der Ausnehmung 61 heraus oder auch durch eine zu hohe Drehbelastung. In beiden Fällen gibt die Kugel 65 quasi nach. Vorzugsweise ist an der Rastaufnahme 67 eine Schräge 75 vorgesehen, die ein Abziehen des Drehmitnahmekörpers 30a vom Drehübertragungsglied 36a erleichtert.

Der Haltekopf 62 kann eine Außenumfangskontur haben, die zur Steckaufnahme 68 passt, z.B. eine zylindrische, ist vorliegend jedoch kubisch.

Zweckmäßigerweise ist der Haltekopf 62 in der Steckaufnahme 68 drehbar, wobei die Drehfestigkeit durch die Rastanordnung 66 hergestellt wird.

Weiterhin ist zwischen einem Außenumfang des Drehmitnahmekörpers 30a und einem Innenumfang der Ausnehmung 61 eine Lagerscheibe 69 angeordnet, so dass der Drehmitnahmekörper 30a in der Ausnehmung 61 drehbar gelagert ist.

Die Lagerscheibe 69 ist vorliegend eine Scheibe mit einem Flanschvorsprung, der sich an einer Stufe 70 der Ausnehmung 61 abstützt. Die Federanordnung 32 wirkt weiterhin auf eine Stirnseite des Haltekopfes 62, mithin also auf eine Stirnseite der Umfangswand, die die Steckaufnahme 68 begrenzt.

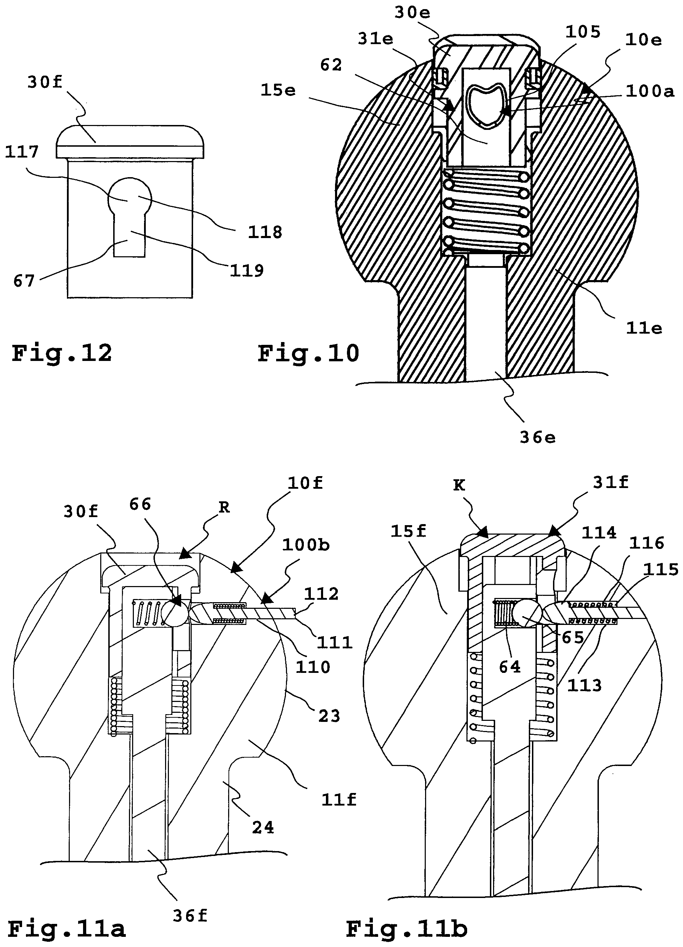

Es wäre auch möglich, dass die Federanordnung 32 auf den Drehmitnahmekörper 30a wirkt, z.B. in der Art wie auf den Drehmitnahmekörper 30f, siehe Figuren 11a, 11b.

An dem Drehmitnahmekörper 30a ist weiterhin eine Dichtung 71 vorgesehen, deren Außenumfang am Innenumfang der Ausnehmung 61 anliegt. Die Dichtung 71 ist in einer Ringnut 72 des Drehmitnahmekörpers 30 aufgenommen. Beispielsweise ist die Dichtung 71 im Querschnitt U-förmig.

An seiner freien, der Kupplungsaufnahme 18 zugewandten oder zugeordneten Stirnseite hat der Drehmitnahmekörper 30a noch eine Reibkappe 73, beispielsweise aus NBR. Die Reibkappe 73 ist an ihrem Außenumfang abgerundet, d.h. sie hat Rundungen, die etwa denselben Verlauf haben, wie die Krümmung der Kugel- bzw. Umfangsmantelfläche 29, vorzugsweise sogar noch etwas stärker geneigt. Dadurch gleitet die Innenfläche 22 der Kupplungsaufnahme 18 stets auf die Reibkappe 73 auf, z.B. beim Aufsetzen auf die Kupplungskugel 15a und/oder beim Fahrbetrieb, was Zerstörungen verhindert. Andererseits reibt die Reibkappe 73 derart an der Innenseite der Kupplungsaufnahme 18, dass ein Reibschluss hergestellt ist. Dreht also die Zugkugelkupplung 16 relativ zur Kupplungskugel 15a, wird dadurch der Drehmitnahmekörper 30a mit gedreht und mit ihm auch die übrigen Komponenten der Drehmitnahmeeinrichtung 31a, also auch das Drehübertragungsglied 36a und das daran angeordnete Erregerglied 38.

Andererseits kann der Drehmitnahmekörper 30a bei Verschleiß leicht ausgewechselt werden. Unterhalb der Reibkappe 73 ist am Drehmitnahmekörper 30a vorzugsweise ein Eingriff, insbesondere eine Ringnut 74 vorhanden, an dem der Drehmitnahmekörper 30a ergriffen und von dem Drehübertragungsglied 36a abgezogen werden kann.

Selbstverständlich könnte die Reibkappe 73 auch anders als dargestellt noch Formschlussvorsprünge und/oder Aufnahmen an ihrer Drehmitnahmefläche 76 aufweisen, um einen formschlüssigen Kontakt mit der Kupplungsaufnahme 18 herzustellen.

Der Drehmitnahmekörper 30b der Anhängekupplung 10b wird von einem Reibrad 80 gebildet, das in einer Ausnehmung 81 an der Kupplungskugel 15b aufgenommen ist. Die Ausnehmung 81 ist in der Art einer Tasche ausgestaltet. Das Reibrad 80 ist an einer separaten Lagerwelle 82 gelagert. Ein Außenumfang des Reibrades 80 ist in Reibkontakt mit einem dem Reibrad 80 zugewandten Ende der Drehwelle 37 und treibt die Drehwelle 37 an. Dreht also die Zugkugelkupplung 16 auf der Kupplungskugel 15b, wird das Reibrad 80 mit gedreht. Das Reibrad 80 treibt dann seinerseits die Drehwelle 37 an, an deren der Sensoranordnung 40 zugewandten Seite das Erregerglied 38 angeordnet ist.

Die Lagerwelle 82 und die Drehwelle 37 sind parallel zueinander angeordnet. Es versteht sich, dass auch eine Schräganordnung möglich ist. Mithin ist also das Reibrad 80 Bestandteil eines Reibradgetriebes 83.

Bei der Anhängekupplung 10c hingegen ist ein Radialkörper 85, der das Drehübertragungsglied 36c bildet, mit der Drehwelle 37 drehfest verbunden. Der Radialkörper 85, der anders als dargestellt in der Zeichnung auch durch einen Stiftkörper gebildet sein könnte, der radial von der Drehwelle 37 absteht und vor die Kugeloberfläche 23 vorsteht, ist vorliegend als eine Art Kreissegmentscheibe ausgestaltet. Mithin steht also ein Ringumfang des Radialkörpers 85 vor die Kugeloberfläche 23 vor, um dort einen Reibschluss mit der Kupplungsaufnahme 18 herzustellen, wenn die Zugkugelkupplung 16 auf die Kupplungskugel 15c aufgesetzt ist. Der Radialkörper 85 ist in einer Ausnehmung 86 der Kupplungskugel 15c schwenkbar gelagert. Er kann um die Drehachse 35 schwenken, vorliegend um ca. 130°. Es versteht sich, dass ein derart großer Schwenkwinkel in der Praxis nicht notwendig ist, so dass die Ausnehmung 86 anders als dargestellt einen kleineren Winkelsegmentanteil der Kupplungskugel 15c einschließen könnte. Größe Schwenkwinkel sind aber auch realisierbar, z.B. 180 °.

Bei der Anhängekupplung 10d ist an dem von der Sensoranordnung 40 abgewandten Ende des Drehübertragungsglieds 36d ein Rad 90 drehfest angeordnet. Das Rad 90 ist ein Bestandteil eines Riemengetriebes 91, das in einer Ausnehmung 92 an der Kupplungskugel 15d angeordnet ist. Das Rad 90 wird durch einen Riemen 93 angetrieben, der sowohl um das Rad 90 als auch um eine Umlenkrolle 94 verläuft. Zum Antrieb des Riemens 93 sind Mitnehmerrollen 95 vorgesehen, die vor die Ausnehmung 92, d.h. vor die Kupplungskugel 15d vorstehen. Der Riemen 93 läuft also zwischen der Umlenkrolle 94 und den beiden Mitnehmerrollen 95, die insgesamt etwa in den Eckbereichen eines Dreieckes angeordnet sind. Selbstverständlich würde auch nur eine einzige Mitnehmerrolle 95 ausreichen. Allerdings stellen die beiden Mitnehmerrollen 95 einen besseren Reibschluss zur Kupplungsaufnahme 18 her.

An dieser Stelle sei noch bemerkt, dass selbstverständlich auch ein Reibriemen oder ein sonstiges Mitnahmeglied flexibler Art auch direkt vor eine Oberfläche einer Kupplungskugel einer erfindungsgemäßen Anhängekupplung vorstehen könnte, um direkt von der Zugkugelkupplung, beispielsweise deren Innenfläche, in der jeweiligen Drehrichtung angetrieben zu werden.

Beim Ausführungsbeispiel gemäß Figuren 1 bis 3 ist der Drehmitnahmekörper 30a stets in die Kontaktstellung K federbelastet, was beispielsweise einen Ausgleich bei Kupplungsaufnahmen 18 unterschiedlicher Hersteller oder sonstiger Toleranzen ermöglicht. Vorteilhaft ist es aber auch, wenn der Drehmitnahmekörper nicht stets in der Kontaktstellung K ist, in der der vor die Kugeloberfläche 23 jedenfalls weit vorsteht, sondern auch in eine Ruhestellung R verstellbar ist, in der er beispielsweise mit der Kugeloberfläche 23 fluchtet oder gar hinter diese zurückversetzt ist. Das ist bei den Ausführungsbeispielen gemäß Figuren 10 bis 12 der Fall, wobei bei den Anhängekupplungen 10e und 10f Halteanordnungen 100a, 100b vorgesehen sind, um den Drehmitnahmekörper 30e, 30f in der Ruhestellung R zu halten oder zu einer Verstellung in die Kontaktstellung K freizugeben.

Bei der Anhängekupplung 10e ist eine Herzkurve 105 vorgesehen, beispielsweise an der Innenseite bzw. der Steckaufnahme 68 des Drehmitnahmekörpers 30e, in die ein Kurvenfolger (nicht dargestellt) am Haltekopf 62 des Drehübertragungsgliedes 36e eingreift. Die Funktionsweise ist beispielsweise von Kugelschreibern mit Druckknopfbetätigung bekannt. Es versteht sich, dass die Herzkurve 105 auch am Haltekopf 62 angeordnet sein kann, wohingegen der Kurvenfolger, der in die Herzkurve 105 eingreift, in diesem Falle dann an der Innenseite der Steckaufnahme 68 anzuordnen wäre.

Eine Grundkonstruktion der Anhängekupplung 10f gleicht der Anhängekupplung 10a, wobei allerdings der Drehmitnahmekörper 30f durch ein Betätigungsglied 110, das mit der Rastanordnung 66 zusammenwirkt, einen Bestandteil der Halteanordnung 100b bildet. Das Betätigungsglied 110 hat eine vor die Kugeloberfläche 23 vorstehende Betätigungsfläche 111 an seinem Betätigungsende 112. Das Betätigungsglied 110 ist stangenartig oder stabförmig ausgestaltet. Das Betätigungsende 112 steht in der Art eines Druckknopfes oder Stiftes vor die Kugeloberfläche 23 vor, z.B. etwa äquatorial. Das Betätigungsglied 110 ist in einem Kanal 113 an der Kupplungskugel 15f schiebebeweglich gelagert. Der Kanal 113 verläuft winkelig, vorliegend rechtwinkelig, zum Lagerkanal 55 oder zum Außenumfang des Drehmitnahmekörpers 30f. Der Kanal 113 fluchtet mit einer Schlüssellochbohrung 117 des Drehmitnahmekörpers 30f, die eine Blockieröffnung 118 sowie einen Führungskanal 119, der der Rastaufnahme 67 funktional entspricht, umfasst.

Das Betätigungsglied 110 ist durch eine Feder 116 federbelastet, die sich an einem Boden 115 des Kanals 113 einerseits und andererseits an einem Kopf 114 des Betätigungsglieds 110 abstützt und dieses in eine Freigabestellung (Figur 11b) belastet. In der Freigabestellung F wirkt das Betätigungsglied 110 auf die Kugel 65, also das Rastglied der Rastanordnung 66, und drückt dieses aus der Blockieröffnung 118 heraus. Dann kann die Federanordnung 32 das Drehübertragungsglied 36f in die Kontaktstellung K verstellen, da die Kugel 65 in den Führungskanal 119 gelangen kann, um eine spielfreie Drehmitnahme des Drehmitnahmekörpers 30f an dem Drehübertragungsglied 36f zu realisieren.

Die Federkonstante der Feder 116 ist kleiner als die Federkonstante der Feder 64, so dass das Betätigungsglied 110 im unbelasteten Zustand, d.h. wenn nichts auf das Betätigungsende 112 in Richtung des Drehmitnahmekörpers 30f einwirkt, nach radial außen vor die Kugeloberfläche 23 verdrängt wird, wobei die Kugel 65 in die Blockieröffnung 118 eindringt.

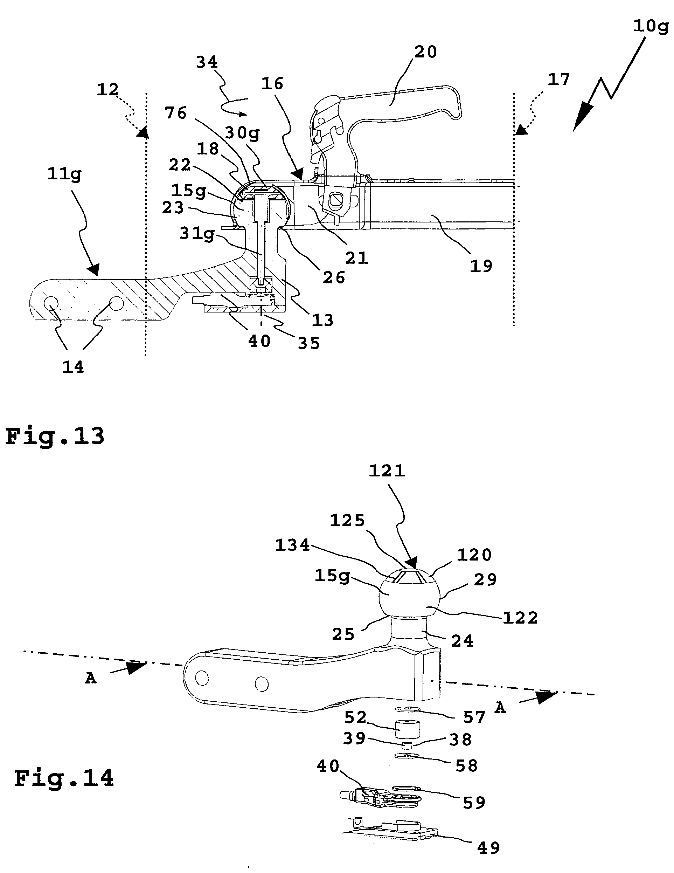

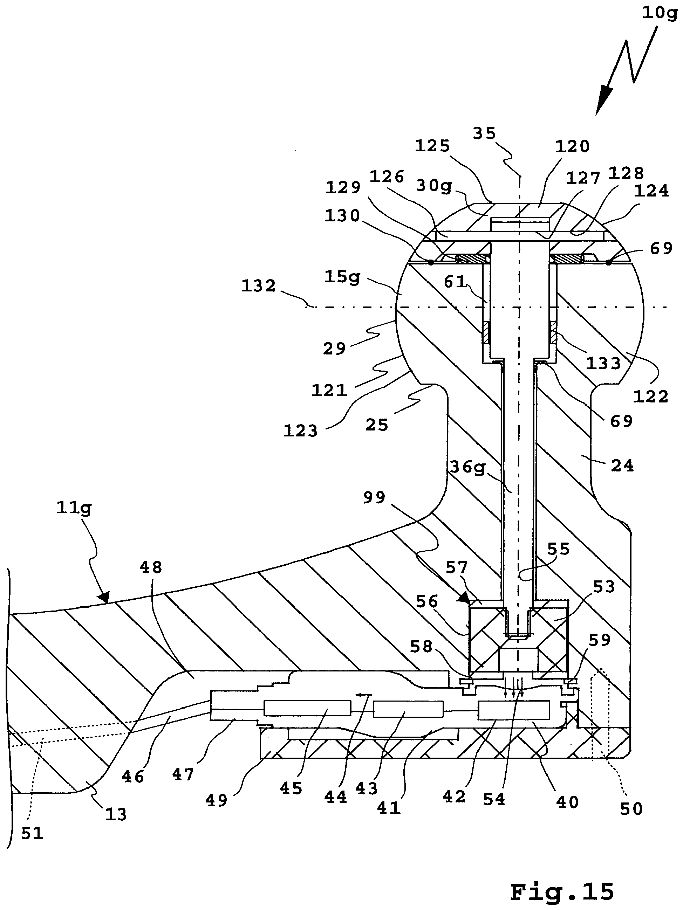

Das in den Figuren 13 bis 15 beschriebene siebte Ausführungsbeispiel hat ähnliche Komponenten wie die Anhängekupplung gemäß Figuren 1-3, allerdings nicht mit einem stiftartigen Drehmitnahmekörper 30a, sondern mit einem eine Art Kappe bildenden Kugelsegment 120 als Drehmitnahmekörper 30g.

Das Kugelsegment 120 bildet eine Art Kappe einer Gesamtkugel 121, die auch noch einen unteren Teil umfasst, nämlich eine Teilkugel 122. Das Kugelsegment 120 und die Teilkugel 122 sind komplementär zueinander, das heißt sie ergänzen sich. Eine Kugeloberfläche 123 der unteren Teilkugel 122 und eine Kugeloberfläche 124 des Kugelsegments 120 bzw. Drehmitnahmekörper 30g ergänzen sich zu der gesamten Kugeloberfläche 23.

Dabei ist die Anordnung so getroffen, dass die untere, von der beim Zugebetrieb der Anhängekupplung 10g feststehenden Teilkugel 122 bereitgestellte Kugeloberfläche 123 im Vergleich zur oberen Kugeloberfläche 124 zumindest in Bezug auf den Eingriff bzw. die Zusammenwirkung mit der Kupplungsaufnahme 18 größer ist. Mithin greift also die Kupplungsaufnahme 18 zumindest was die Zugkräfte oder Schubkräfte oder Querkräfte in horizontaler Richtung (beim Fahrbetrieb) betrifft, im Wesentlichen an der feststehenden, sie gleitend lagernden Kugeloberflächen 123 an.

Der obere Teil der Gesamtkugel 121, nämlich die Kugeloberfläche 124, dient hingegen der Drehmitnahme, um über das Übertragungsglied 36g einen Drehimpuls bzw. ein Drehsignal auf den Drehwinkelsensor 42 zu erzeugen.

Selbstverständlich ist die obere Kugeloberfläche 124 zweckmäßigerweise mit einer Haftbeschichtung und/oder einer Verrippung oder einer sonstigen, schematisch dargestellten Formschlusskontur 134 ausführbar, um die Drehmitnahme zwischen einerseits der Zugkugelkupplung 16 und andererseits dem Drehmitnahmekörper 30g zu verbessern.

Ferner kann die obere Kugeloberfläche 124 auch mit einem elastischen Kunststoff versehen oder daraus gebildet sein, wobei der Kunststoff vorteilhaft nachgibt, wenn die Zugkugelkupplung 16 aufliegt.

Weiter kann der Drehmitnahmekörper 30g vorteilhaft in Richtung vom beim Zugebetrieb der Anhängekupplung 10g feststehenden Teil weg, insbesondere von der Teilkugel 122 weg, (in die Kontaktstellung K) federbelastet sein, um den Kontakt mit der Zugkugelkupplung 16 zu verbessern.

Normgerechte Kupplungskugeln sind an ihrer Oberseite abgeflacht. Dementsprechend weißt zweckmäßigerweise auch die Teilkugel 122 an ihrer Oberseite eine Abflachung 125 auf. Insbesondere der Bereich der Abflachung 125 kann für eine formschlüssige Mitnahme ausgestaltet sein. Man kann beispielsweise eine Verzahnung, beispielsweise in der Art eines Schraubenkopfes vorsehen, in die ein entsprechender Vorsprung, z.B. in der Art eines Schrauberbits, an der Zugkugelkupplung 16 (nicht dargestellt) eingreift.

Der Drehmitnahmekörper 30g ist mit dem Drehübertragungsglied 36g drehfest verbunden. Dazu durchdringt ein Stift 126 zueinander koaxiale Bohrungen 127, 128 am Drehübertragungsglied 36g und dem Drehmitnahmekörper 30g.

In einem Kontaktbereich des Kugelsegments 120 zur Teilkugel 122, das heißt im Bereich einander gegenüberliegender Stirnseiten, ist ein Wälzlager 129 angeordnet, das den Drehmitnahmekörper 30g in Richtung der Drehachse 35 unmittelbar auf dem feststehenden Teil der Anhängekupplung 10g lagert, nämlich an einer Stirnseite 131 der Teilkugel 122. Bevorzugt ist an dem Kugelsegment und/oder der Teilkugel eine Aufnahme vorgesehen, in der das Wälzlager 129 aufgenommen ist.

Das Wälzlager 129 befindet sich im Innenraum einer Dichtung 130, vorliegenden einem O-Ring oder Dichtring, so dass es gegenüber Umwelteinflüssen geschützt ist.

Das Kugelsegment 120 befindet sich oberhalb einer äquatorialen Ebene 132 der Gesamtkugel 121, so dass sich die Zugkugelkupplung 16 nicht nur unterhalb der äquatorialen Ebene 132, sondern auch oberhalb derselben an der Kugeloberfläche 123 abstützen kann.

Zweckmäßigerweise kann im Bereich des Drehübertragungsglieds 36g eine zusätzliche Lagerung, insbesondere ein Wälzlager vorgesehen sein. Beispielsweise könnte in der Ausnehmung 61 ein Wälzlager 133 angeordnet werden, das insbesondere zur Aufnahme von quer zur Drehachse 35 wirkenden Kräften ausgestaltet ist.

Die Wälzlager 133, 129 können beispielsweise Nadellager, Rollenlager oder Kugellager sein.

Weiterhin ist festzuhalten, dass selbstverständlich beliebige Kombinationen der vorigen Ausführungsbeispiele sowie der eingangs genannten Ausführungsformen möglich sind.

Des Weiteren ist es nicht unbedingt erforderlich, dass die Sensoranordnung unmittelbar an der Unterseite des Kugelträgers angeordnet ist, sondern auch einen weiter oben an der Kupplungseinrichtung angeordneten Sensor umfassen könnte.

## Patentansprüche

1. Anhängekupplung für ein Zugfahrzeug (12), insbesondere ein Personen-Kraftfahrzeug, zum Anhängen eines Anhängers (17) an das Zugfahrzeug (12), mit einer Kupplungseinrichtung (11a-11f), die einen Kugelträger (13) und eine an einem freien Ende des Kugelträgers (13) angeordnete Kupplungskugel (15a-15g) zum drehbaren Lagern einer Kupplungsaufnahme (18) einer Zugkugelkupplung (16) des Anhängers (17) umfasst, wobei eine Innenfläche (22) der Kupplungsaufnahme (18) an einer Kugeloberfläche (23) der Kupplungskugel (15a-15g) gleiten kann, und mit einer Sensoranordnung (40) zur Erfassung eines Drehwinkels (34) der Zugkugelkupplung (16) bezüglich des Kugelträgers (13), wobei sie eine Drehmitnahmeeinrichtung (31a-31g) aufweist, die mindestens einen in einer Kontaktstellung (K) vor die Kugeloberfläche (23) vorstehenden Drehmitnahmekörper (30a-30g) aufweist, der relativ zu der Kugeloberfläche (23) an der Kupplungseinrichtung (11a-11f) drehbar gelagert ist und eine zu einem reibschlüssigen und/oder formschlüssigen und/oder kraftschlüssigen Drehmitnahmekontakt mit der Kupplungsaufnahme (18), insbesondere der Innenfläche (22) der Kupplungsaufnahme (18), ausgestaltete Drehmitnahmefläche (76) aufweist, und wobei die Sensoranordnung (40) zur Erfassung eines Drehwinkels (34) des mindestens einen Drehmitnahmekörpers (30a-30g) relativ zu dem Kugelträger (13) ausgestaltet ist, **dadurch gekennzeichnet, dass** der mindestens eine Drehmitnahmekörper (30a-30g) eine Elastizität in Richtung der Kontaktstellung (K) aufweist und/oder durch eine Federanordnung (32) in die Kontaktstellung (K) federbelastet ist, in der mindestens eine Drehmitnahmekörper (30a-30g) vor die Kugeloberfläche (23) vorsteht.

2. Anhängekupplung nach Anspruch 1, **dadurch gekennzeichnet, dass** zwischen der Sensoranordnung (40) und dem mindestens einen Drehmitnahmekörper (30a-30g) ein mit dem mindestens einen Drehmitnahmekörper (30a-30g) drehgekoppeltes, insbesondere als Drehwelle (37) ausgestaltetes und/oder mit dem Drehmitnahmekörper (30a-30g) einstückiges, Drehübertragungsglied (36a-36g) angeordnet ist.

3. Anhängekupplung nach Anspruch 1 oder 2, **dadurch gekennzeichnet, dass** die Kupplungskugel (15a-15g) und die Sensoranordnung (40) an einander entgegengesetzten Seiten des Kugelträgers (13) angeordnet sind.

4. Anhängekupplung nach einem der vorhergehenden Ansprüche, **dadurch gekennzeichnet, dass** der Drehmitnahmekörper (30a-30g) als Kugelsegment (120) und die Kupplungskugel (15a-15g) als Teilkugel (122) ausgestaltet sind, und dass das Kugelsegment (120) die Teilkugel (122) zu einer, insbesondere vertikal stirnseitig abgeflachten, Gesamtkugel (121) ergänzt.

5. Anhängekupplung nach Anspruch 4, **dadurch gekennzeichnet, dass** das Kugelsegment (120) eine vertikal obere Stirnseite der Gesamtkugel (121) bereitstellt und/oder dass das Kugelsegment (120) oberhalb einer äquatorialen Ebene (132) der Gesamtkugel (121) angeordnet ist und/oder dass zwischen einer dem Kugelsegment (120) zugewandten Stirnseite (131) der Teilkugel (122) und dem Kugelsegment (120) ein Gleitlager und/oder ein Wälzlager (129) und/oder ein Dichtung (130), insbesondere ein Dichtring, angeordnet sind.

6. Anhängekupplung nach einem der vorhergehenden Ansprüche, **dadurch gekennzeichnet, dass** das Drehübertragungsglied (36a-36g) und der mindestens eine Drehmitnahmekörper (30a-30g) insbesondere werkzeuglos lösbar miteinander verbunden sind und/oder dass der mindestens eine Drehmitnahmekörper (30a-30g) und das Drehübertragungsglied (36a-36g), insbesondere spielfrei, drehfest miteinander verbunden sind oder relativ zueinander beweglich und über ein Getriebe miteinander drehgekoppelt sind und/oder dass das Drehübertragungsglied (36a-36g) und der mindestens eine Drehmitnahmekörper (30a-30g) durch eine Rastanordnung (66) miteinander verrastbar sind, wobei die Rastanordnung (66) vorteilhaft ein insbesondere an dem Drehübertragungsglied (36a-36g) angeordnetes, federbelastetes Rastglied umfasst, das in eine insbesondere als Nut ausgestaltete Rastaufnahme (67) eingreift.

7. Anhängekupplung nach einem der vorhergehenden Ansprüche, **dadurch gekennzeichnet, dass** das Drehübertragungsglied (36a-36g) den Drehmitnahmekörper (30a-30g) drehbar bezüglich eines Grundkörpers der Kupplungseinrichtung (11a-11f) lagert.

8. Anhängekupplung nach einem der vorhergehenden Ansprüche, **dadurch gekennzeichnet, dass** die Drehmitnahmeeinrichtung (31a-31g) ein mit dem mindestens einen Drehmitnahmekörper (30a-30g) drehgekoppeltes Erregerglied (38), insbesondere einen Erregermagneten (39), zur Zusammenwirkung mit der Sensoranordnung (40) aufweist und/oder dass sie eine insbesondere an der Drehmitnahmeeinrichtung (31a-31g) angeordnete Abschirmung (52) für das Erregerglied (38) aufweist.

9. Anhängekupplung nach einem der vorhergehenden Ansprüche, **dadurch gekennzeichnet, dass** sich die Federanordnung (32) an einem Drehlager, insbesondere einem Lagerring, abstützt, mit dem die Drehmitnahmeeinrichtung (31a-31g) an einem Grundkörper der Kupplungseinrichtung (11a-11f) drehbar gelagert ist.

10. Anhängekupplung nach einem der vorhergehenden Ansprüche, **dadurch gekennzeichnet, dass** der mindestens eine Drehmitnahmekörper (30a-30g) in der Kontaktstellung (K) und/oder in einer Ruhestellung (R) durch eine Halteanordnung (100a; 100b) festlegbar, insbesondere verrastbar ist, in der der mindestens eine Drehmitnahmekörper (30a-30g) weniger weit vor die Kugeloberfläche (23) vorsteht als in der Kontaktstellung (K), insbesondere mit Kugeloberfläche (23) fluchtet oder hinter die Kugeloberfläche (23) zurückversetzt ist.

11. Anhängekupplung nach Anspruch 10, **dadurch gekennzeichnet, dass** die Halteanordnung (100a; 100b) eine Herzkurve (105), in die ein Kurvenfolger eingreift, und/oder ein Betätigungsglied (110) umfasst, das eine vor die Kupplungseinrichtung (11a-11f) vorstehende, insbesondere durch die Zugkugelkupplung (16) betätigbare Betätigungsfläche (111) aufweist, mit der das Betätigungsglied (110) in eine Freigabestellung betätigbar ist, in der der mindestens eine Drehmitnahmekörper (30a-30g) zu einer Verstellung in die Kontaktstellung (K) freigegeben ist, und das in einer Blockierstellung eine Blockierung des mindestens einen Drehmitnahmekörpers (30a-30g) in der Ruhestellung (R) bewirkt, wobei das Betätigungsglied (110) zweckmäßigerweise auf die Rastanordnung (66), insbesondere deren Rastglied, wirkend angeordnet ist, mit der das Drehübertragungsglied (36a-36g) und der mindestens eine Drehmitnahmekörper (30a-30g) miteinander verrastbar sind.

12. Anhängekupplung nach einem der vorhergehenden Ansprüche, **dadurch gekennzeichnet, dass** die Kugeloberfläche (23) eine vom Kugelträger (13) abgewandte Oberseite (27), insbesondere eine Stirnseite (28), und eine sich zwischen der Oberseite (27) und dem Kugelträger (13) erstreckende Umfangsmantelfläche (29) aufweist, und dass der mindestens eine Drehmitnahmekörper (30a-30g) einen Drehmitnahmekörper (30a-30g) umfasst, der in der Kontaktstellung (K) vor die Oberseite (27) vorsteht und/oder einen Drehmitnahmekörper (30a-30g) umfasst, der in der Kontaktstellung (K) vor die Umfangsmantelfläche (29) vorsteht.

13. Anhängekupplung nach einem der vorhergehenden Ansprüche, **dadurch gekennzeichnet, dass** der Drehmitnahmekörper (30a-30g) ein Rad (80) oder einen flexiblen Riemen (93) oder einen insbesondere als Flügelsegment ausgestalteten Radialkörper (85) oder ein Kappenelement umfasst oder dadurch gebildet ist und/oder dass der Drehmitnahmekörper (30a-30g) aus einem reibschlüssigen Antirutsch-Material, insbesondere Nitrilkautschuk, besteht oder mit einer Beschichtung aus Antirutsch-Material versehen ist und/oder dass der Drehmitnahmekörper (30a-30g) mindestens eine Formschlusskontur zur Herstellung eines Formschlusses mit der Kupplungsaufnahme (18) aufweist und/oder dass der Drehmitnahmekörper (30a-30g) für eine Kraftwirkung in Richtung der Kupplungsaufnahme (18) mindestens einen Magneten aufweist.

14. Anhängekupplung nach einem der vorhergehenden Ansprüche, **dadurch gekennzeichnet, dass** die Drehmitnahmeeinrichtung (31a-31g), insbesondere der mindestens eine Drehmitnahmekörper (30a-30g), mittels einer Lageranordnung (99) derart an der Kupplungseinrichtung (11a-11f) drehbar gelagert ist, dass eine Reibung zwischen dem mindestens einen Drehmitnahmekörper (30a-30g) und der Kupplungsaufnahme (18), wenn diese an der Anhängekupplung montiert ist, mindestens doppelt so groß, zweckmäßigerweise 3 bis 10 mal so groß, vorzugsweise 11 bis 30 mal so groß ist wie eine Reibung zwischen der Drehmitnahmeeinrichtung (31a-31g) und der Kupplungseinrichtung (11a-11f).

15. Verwendung einer Sensoranordnung (40) mit einer Anhängekupplung (10a-10g) für ein Zugfahrzeug (12), insbesondere ein Personen-Kraftfahrzeug, die zum Anhängen eines Anhängers (17) an das Zugfahrzeug (12) eine Kupplungseinrichtung (11a-11f) aufweist, wobei die Kupplungseinrichtung (11a-11f) einen Kugelträger (13) und eine an einem freien Ende des Kugelträgers (13) angeordnete Kupplungskugel (15a-15g) zum drehbaren Lagern einer Kupplungsaufnahme (18) einer Zugkugelkupplung (16) des Anhängers (17) umfasst, wobei eine Innenfläche (22) der Kupplungsaufnahme (18) an einer Kugeloberfläche (23) der Kupplungskugel (15a-15g) gleiten kann, wobei die Sensoranordnung (40) zur Erfassung eines Drehwinkels (34) der Zugkugelkupplung (16) bezüglich des Kugelträgers (13) vorgesehen ist, wobei die Sensoranordnung (40) eine Drehmitnahmeeinrichtung (31a-31g) aufweist, die mindestens einen in einer Kontaktstellung (K) vor die Kugeloberfläche (23) vorstehenden Drehmitnahmekörper (30a-30g) aufweist, der relativ zu der Kugeloberfläche (23) an der Kupplungseinrichtung (11a-11f) drehbar gelagert ist und eine zu einem reibschlüssigen und/oder formschlüssigen Drehmitnahmekontakt mit der Kupplungsaufnahme (18) ausgestaltete Drehmitnahmefläche (76) aufweist, und wobei die Sensoranordnung (40) zur Erfassung eines Drehwinkels (34) des mindestens einen Drehmitnahmekörpers (30a-30g) relativ zu dem Kugelträger (13) ausgestaltet ist, **dadurch gekennzeichnet, dass** der mindestens eine Drehmitnahmekörper (30a-30g) eine Elastizität in Richtung der Kontaktstellung (K) aufweist und/oder durch eine Federanordnung (32) in die Kontaktstellung (K) federbelastet ist, in der mindestens eine Drehmitnahmekörper (30a-30g) vor die Kugeloberfläche (23) vorsteht.

## Claims

1. Trailer coupling for a towing vehicle (12), in particular a car, for attaching a trailer (17) to the towing vehicle (12), with a coupling device (11a-11f) which includes a ball carrier (13) and a coupling ball (15a-15g) mounted at the free end of the ball carrier (13) for rotatable bearing of a coupling seating (18) of a tow ball coupling (16) of the trailer (17), wherein an inner surface (22) of the coupling seating (18) is able to slide on a ball surface (23) of the coupling ball (15a-15g), and with a sensor array (40) to detect an angle of rotation (34) of the tow ball coupling (16) relative to the ball carrier (13), wherein it has a rotary driving device (31a-31g) which has at least one rotary driving body (30a-30g) protruding in a contact position (K) from the ball surface (23) and which is rotatably mounted on the coupling device (11a-11f) relative to the ball surface (23) and has a rotary driving surface (76) designed for frictional and/or form-fitting and/or force-fitting rotary driving contact with the coupling seating (18), in particular the inner surface (22) of the coupling seating (18), and wherein the sensor array (40) is designed to detect an angle of rotation (34) of the rotary driving body or bodies (30a-30g) relative to the ball carrier (13), **characterised in that** the rotary driving body or bodies (30a-30g) has or have elasticity in the direction of the contact position (K) and/or is or are spring-loaded by a spring assembly (32) into the contact position (K), in which the rotary driving body or bodies (30a-30g) stands or stand forward of the ball surface (23).

2. Trailer coupling according to claim 1, **characterised in that** a rotary transmission member (36a-36g) is located between the sensor array (40) and the rotary driving body or bodies (30a-30g), rotation-coupled to the rotary driving body or bodies (30a-30g), in particular in the form of a rotary shaft (37) and/or integral with the rotary driving body (30a-30g).

3. Trailer coupling according to claim 1 or 2, **characterised in that** the coupling ball (15a-15g) and the sensor array (40) are mounted on opposite sides of the ball carrier (13).

4. Trailer coupling according to any of the preceding claims, **characterised in that** the rotary driving body (30a-30g) is designed as a ball segment (120) and the coupling ball (15a-15g) as a ball section (122), and that the ball section (122) is added to form a complete ball (121), in particular flattened on he vertical end face.

5. Trailer coupling according to claim 4, **characterised in that** the ball segment (120) provides a vertical upper end face of the complete ball (121) and/or that the ball segment (120) is arranged above an equatorial plane (132) of the complete ball (121) and/or that a slide bearing and/or a roller bearing (129) and/or a seal (130), in particular a seal ring, are fitted between an end face (131) of the ball section (122) facing the ball segment (120) and the ball segment (120).

6. Trailer coupling according to any of the preceding claims, **characterised in that** the rotary transmission member (36a-36g) and the rotary driving body or bodies (30a-30g) are connected to one another releasably, in particular without tools, and/or that the rotary driving body or bodies (30a-30g) and the rotary transmission member (36a-36g) are connected non-rotatably to one another, in particular without play, or are movable relative to one another and rotation-coupled to one another via a gear and/or that the rotary transmission member (36a-36g) and the rotary driving body or bodies (30a-30g) may be engaged with one another through a latching arrangement (66), wherein the latching arrangement (66) advantageously includes a spring-loaded latching element, in particular fitted to the rotary transmission member (36a-36g), and which engages in a latching location (67), in particular in the form of a slot.

7. Trailer coupling according to any of the preceding claims, **characterised in that** the rotary transmission member (36a-36g) supports the rotary driving body (30a-30g) rotatably relative to the base body of the coupling device (11a-11f).

8. Trailer coupling according to any of the preceding claims, **characterised in that** the rotary driving device (31a-31g) has an exciter member (38), in particular an exciter magnet (39), rotation-coupled to the rotary driving body or bodies (30a-30g) for interaction with the sensor array (40), and/or that it has a shield (52) for the exciter member (38), fitted in particular to the rotary driving device (31a-31g).

9. Trailer coupling according to any of the preceding claims, **characterised in that** the spring assembly (32) rests on a rotary bearing, in particular a bearing ring, by which the rotary driving device (31a-31g) is rotatably mounted on a base body of the coupling device (11a-11f).

10. Trailer coupling according to any of the preceding claims, **characterised in that** the rotary driving body or bodies (30a-30g) may be fixed, in particular engaged, by a holding arrangement (100a; 100b) in the contact position (K) and/or in a rest position (R) in which the rotary driving body or bodies (30a-30g) is or are less far forward from the ball surface (23) than in the contact position (K), in particular with the ball surface (23) flush or recessed behind the ball surface (23).

11. Trailer coupling according to claim 10, **characterised in that** the holding arrangement (100a; 100b) includes a cardioid (105) in which a cam follower engages, and/or an actuating member (110) which has an actuating face (111) standing forward of the coupling device (11a-11f), in particular actuable by the tow ball coupling (16), by which the actuating member (110) may be moved into a release position in which the rotary driving body or bodies (30a-30g) is or are released for movement into the contact position (K), and which in a locked position effects a locking of the rotary driving body or bodies (30a-30g) in the rest position (R), wherein the actuating member (110) is expediently arranged to act on the latching arrangement (66), in particular its latching element, by which the rotary transmission member (36a-36g) and the rotary driving body or bodies (30a-30g) may be engaged with one another.

12. Trailer coupling according to any of the preceding claims, **characterised in that** the ball surface (23) has a top (27) facing away from the ball carrier (13), in particular an end face (28), and a peripheral surface (29) extending between the top (27) and the ball carrier (13), and that the rotary driving body or bodies (30a-30g) includes or include a rotary driving body (30a-30g) which in the contact position (K) protrudes from the top (27), and/or a rotary driving body (30a-30g) which in the contact position (K) protrudes from the peripheral surface (29).

13. Trailer coupling according to any of the preceding claims, **characterised in that** the rotary driving body (30a-30g) includes or is formed by a wheel (80) or a flexible belt (93) or a radial body (85), in particular in the form of a vane segment, or a cap element, and/or that the rotary driving body (30a-30g) is made of a frictionally fitting anti-slip material, in particular nitrile rubber, or is provided with a coating of anti-slip material, and/or that the rotary driving body (30a-30g) has at least one form-fitting contour to create a positive fit with the coupling seating (18), and/or that the rotary driving body (30a-30g) has at least one magnet to provide a force acting in the direction of the coupling seating (18).

14. Trailer coupling according to any of the preceding claims, **characterised in that** the rotary driving device (31a-31g), in particular the rotary driving body or bodies (30a-30g), is rotatably mounted on the coupling device (11a-11f) by means of a bearing assembly (99) in such a way that friction between the rotary driving body or bodies (30a-30g) and the coupling seating (18), when this is mounted on the trailer coupling, is at least twice as great, expediently 3 to 10 times as great, preferably 11 to 30 times as great as friction between the rotary driving device (31a-31g) and the coupling device (11a-11f).

15. Use of a sensor array (40) with a trailer coupling for a towing vehicle (12), in particular a car, which has a coupling device (11a-11f) for attaching a trailer (17) to the towing vehicle (12), wherein the coupling device (11a-11f) includes a ball carrier (13) and a coupling ball (15a-15g) mounted at the free end of the ball carrier (13) for rotatable bearing of a coupling seating (18) of a tow ball coupling (16) of the trailer (17), wherein an inner surface (22) of the coupling seating (18) is able to slide on a ball surface (23) of the coupling ball (15a-15g), wherein the sensor array (40) is provided to detect an angle of rotation (34) of the tow ball coupling (16) relative to the ball carrier (13), wherein the sensor array (40) has a rotary driving device (31a-31g) which has at least one rotary driving body (30a-30g) protruding in a contact position (K) from the ball surface (23) and which is rotatably mounted on the coupling device (11a-11f) relative to the ball surface (23) and has a rotary driving surface (76) designed for frictional and/or form-fitting and/or force-fitting rotary driving contact with the coupling seating (18), and wherein the sensor array (40) is designed to detect an angle of rotation (34) of the rotary driving body or bodies (30a-30g) relative to the ball carrier (13), **characterised in that** the rotary driving body or bodies (30a-30g) has or have elasticity in the direction of the contact position (K) and/or is or are spring-loaded by a spring assembly (32) into the contact position (K), in which the rotary driving body or bodies (30a-30g) stands or stand forward of the ball surface (23).

## Revendications

1. Attelage de remorque pour un véhicule à traction (12), en particulier un véhicule de tourisme, servant à atteler une remorque (17) au véhicule à traction (12), avec un dispositif d'attelage (11a - 11f), qui comprend un support de boule (13) et une boule d'attelage (15a - 15g) disposée au niveau d'une extrémité libre du support de boule (13), servant au montage rotatif d'un logement d'attelage (18) d'un attelage à boule de traction (16) de la remorque (17), dans lequel une face intérieure (22) du logement d'attelage (18) peut glisser au niveau d'une surface de boule (23) de la boule d'attelage (15a - 15g), et avec un ensemble formant capteur (40) servant à détecter un angle de rotation (34) de l'attelage à boule de traction (16) par rapport au support de boule (13), dans lequel il présente un dispositif d'entraînement en rotation (31a - 31g), qui présente au moins un corps d'entraînement en rotation (30a - 30g) faisant saillie devant la surface de boule (23) dans une position de contact (K), qui est monté de manière à pouvoir tourner par rapport à la surface de boule (23) au niveau du dispositif d'attelage (11a-11f) et présente une face d'entraînement en rotation (76) configurée pour un contact d'entraînement en rotation par friction et/ou à complémentarité de forme et/ou à force avec le logement d'attelage (18), en particulier la face intérieure (22) du logement d'attelage (18), et dans lequel l'ensemble formant capteur (40) est configuré pour détecter un angle de rotation (34) de l'au moins un corps d'entraînement en rotation (30a - 30g) par rapport au support de boule (13), **caractérisé en ce que** l'au moins un corps d'entraînement en rotation (30a - 30g) présente une élasticité en direction de la position de contact (K) et/ou est contraint par ressort par un ensemble formant ressort (32) dans la position de contact (K), dans laquelle au moins un corps d'entraînement en rotation (30a - 30g) fait saillie devant la surface de boule (23).

2. Attelage de remorque selon la revendication 1, **caractérisé en ce qu'**est disposé entre l'ensemble formant capteur (40) et l'au moins un corps d'entraînement en rotation (30a - 30g), un organe de transmission de rotation (36a - 36g) couplé en rotation à l'au moins un corps d'entraînement en rotation (30a - 30g), configuré en particulier sous la forme d'un arbre de rotation (37) et/ou d'un seul tenant avec le corps d'entraînement en rotation (30a - 30g).

3. Attelage de remorque selon la revendication 1 ou 2, **caractérisé en ce que** la boule d'attelage (15a-15g) et l'ensemble formant capteur (40) sont disposés au niveau de côtés opposés les uns aux autres du support de boule (13).

4. Attelage de remorque selon l'une quelconque des revendications précédentes, **caractérisé en ce que** le corps d'entraînement en rotation (30a - 30g) est configuré sous la forme d'un segment de boule (120) et la boule d'attelage (15a - 15g) est configurée sous la forme d'une boule partielle (122), et que le segment de boule (120) complète la boule partielle (122) en une boule entière (121) en particulier aplatie verticalement côté frontal.

5. Attelage de remorque selon la revendication 4, **caractérisé en ce que** le segment de boule (120) fournit un côté frontal verticalement supérieur de la boule entière (121), et/ou que le segment de boule (120) est disposé au-dessus d'un plan équatorial (132) de la boule entière (121), et/ou qu'un palier lisse et/ou un palier à roulement (129) et/ou un joint d'étanchéité (130), en particulier une bague d'étanchéité, sont disposés entre un côté frontal (131), tourné vers le segment de boule (120), de la boule partielle (122) et le segment de boule (120).

6. Attelage de remorque selon l'une quelconque des revendications précédentes, **caractérisé en ce que** l'organe de transmission de rotation (36a - 36g) et l'au moins un corps d'entraînement en rotation (30a - 30g) sont reliés l'un à l'autre de manière amovible en particulier sans outil, et/ou que l'au moins un corps d'entraînement en rotation (30a - 30g) et l'organe de transmission de rotation (36a - 36g) sont reliés l'un à l'autre de manière solidaire en rotation, en particulier sans jeu ou sont couplés en rotation l'un à l'autre de manière mobile l'un par rapport à l'autre et par l'intermédiaire d'un engrenage, et/ou que l'organe de transmission de rotation (36a - 36g) et l'au moins un corps d'entraînement en rotation (30a - 30g) peuvent être enclenchés l'un avec l'autre par un ensemble d'enclenchement (66), dans lequel l'ensemble d'enclenchement (66) comprend de manière avantageuse un organe d'enclenchement disposé en particulier au niveau de l'organe de transmission de rotation (36a - 36g), contraint par ressort, qui vient en prise avec un logement d'enclenchement (67) configuré sous la forme d'une rainure.

7. Attelage de remorque selon l'une quelconque des revendications précédentes, **caractérisé en ce que** l'organe de transmission de rotation (36a - 36g) monte le corps d'entraînement en rotation (30a - 30g) de manière à pouvoir tourner par rapport à un corps de base du dispositif d'attelage (11a - 11f).

8. Attelage de remorque selon l'une quelconque des revendications précédentes, **caractérisé en ce que** le dispositif d'entraînement en rotation (31a - 31g) présente un organe d'excitation (38) couplé en rotation à l'au moins un corps d'entraînement en rotation (30a - 30g), en particulier un aimant d'excitation (39), servant à coopérer avec l'ensemble formant capteur (40), et/ou qu'il présente un blindage (52) pour l'organe d'excitation (38) disposé en particulier au niveau du dispositif d'entraînement en rotation (31a - 31g).

9. Attelage de remorque selon l'une quelconque des revendications précédentes, **caractérisé en ce que** l'ensemble formant ressort (32) prend appui au niveau d'un palier rotatif, en particulier d'une bague de palier, avec lequel le dispositif d'entraînement en rotation (31a - 31g) est monté de manière à pouvoir tourner au niveau d'un corps de base du dispositif d'attelage (11a - 11f).

10. Attelage de remorque selon l'une quelconque des revendications précédentes, **caractérisé en ce que** l'au moins un corps d'entraînement en rotation (30a - 30g) peut être immobilisé, en particulier enclenché, par un ensemble de maintien (100a ; 100b), dans la position de contact (K) et/ou dans une position de repos (R), dans laquelle l'au moins un corps d'entraînement en rotation (30a - 30g) fait saillie moins loin de la surface de boule (23) que dans la position de contact (K), en particulier est aligné avec la surface de boule (23) ou est en retrait derrière la surface de boule (23).

11. Attelage de remorque selon la revendication 10, **caractérisé en ce que** l'ensemble de maintien (100a; 100b) comprend une cardioïde (105), avec laquelle un suiveur de cames vient en prise, et/ou un organe d'actionnement (110), qui présente une face d'actionnement (111) faisant saillie devant le dispositif d'attelage (11a-11f), en particulier pouvant être actionnée par l'attelage à boule de traction (16), avec laquelle l'organe d'actionnement (110) peut être actionné dans une position de libération, dans laquelle l'au moins un corps d'entraînement en rotation (30a - 30g) est libéré aux fins d'un ajustement dans la position de contact (K), et qui entraîne dans une position de blocage un blocage de l'au moins un corps d'entraînement en rotation (30a - 30g) dans la position de repos (R), dans lequel l'organe d'actionnement (110) est disposé de manière appropriée de manière à agir sur l'ensemble d'enclenchement (66), en particulier son organe d'enclenchement, avec lequel l'organe de transmission de rotation (36a - 36g) et l'au moins un corps d'entraînement en rotation (30a - 30g) peuvent être enclenchés l'un avec l'autre.

12. Attelage de remorque selon l'une quelconque des revendications précédentes, **caractérisé en ce que** la surface de boule (23) présente un côté supérieur (27) opposé au support de boule (13), en particulier un côté frontal (28), et une surface extérieure périphérique (29) s'étendant entre le côté supérieur (27) et le support de boule (13), et que l'au moins un corps d'entraînement en rotation (30a - 30g) comprend un corps d'entraînement en rotation (30a - 30g), qui fait saillie devant le côté supérieur (27) dans la position de contact (K), et/ou comprend un corps d'entraînement en rotation (30a - 30g), qui fait saillie devant la surface extérieure périphérique (29) dans la position de contact (K).

13. Attelage de remorque selon l'une quelconque des revendications précédentes, **caractérisé en ce que** le corps d'entraînement en rotation (30a - 30g) comprend une roue (80) ou une courroie (93) flexible ou un corps radial (85) configuré en particulier sous la forme d'un segment d'aile ou un élément de capuchon ou en est formé, et/ou que le corps d'entraînement en rotation (30a - 30g) est constitué d'un matériau antidérapant à friction, en particulier de caoutchouc nitrile, ou est pourvu d'un revêtement composé d'un matériau antidérapant, et/ou que le corps d'entraînement en rotation (30a - 30g) présente au moins un contour à complémentarité de forme servant à établir une complémentarité de forme avec le logement d'attelage (18), et/ou que le corps d'entraînement en rotation (30a - 30g) présente au moins un aimant pour une action de force en direction du logement d'attelage (18).

14. Attelage de remorque selon l'une quelconque des revendications précédentes, **caractérisé en ce que** le dispositif d'entraînement en rotation (31a-31g), en particulier l'au moins un corps d'entraînement en rotation (30a - 30g), est monté de manière à pouvoir tourner au niveau du dispositif d'attelage (11a-11f) au moyen d'un ensemble formant palier (99) de telle manière qu'une friction entre l'au moins un corps d'entraînement en rotation (30a - 30g) et le logement d'attelage (18), quand ce dernier est monté au niveau de l'attelage de remorque, est au moins deux fois plus grande, de manière appropriée 3 à 10 fois plus grande, de préférence 11 à 30 fois plus grande qu'une friction entre le dispositif d'entraînement en rotation (31a - 31g) et le dispositif d'attelage (11a - 11f).

15. Utilisation d'un ensemble formant ressort (40) avec un attelage de remorque (10a - 10g) pour un véhicule à traction (12), en particulier une voiture de tourisme, qui présente un dispositif d'attelage (11a - 11f) pour atteler une remorque (17) au véhicule à traction (12), dans laquelle le dispositif d'attelage (11a - 11f) comprend un support de boule (13) et une boule d'attelage (15a - 15g) disposée au niveau d'une extrémité libre du support de boule (13), servant au montage rotatif d'un logement d'attelage (18) d'un attelage à boule de traction (16) de la remorque (17), dans laquelle une face intérieure (22) du logement d'attelage (18) peut glisser au niveau d'une surface de boule (23) de la boule d'attelage (15a - 15g), dans laquelle un ensemble formant capteur (40) servant à détecter un angle de rotation (34) de l'attelage à boule de traction (16) par rapport au support de boule (13) est prévu, dans laquelle l'ensemble formant capteur (40) présente un dispositif d'entraînement en rotation (31a - 31g), qui présente au moins un corps d'entraînement en rotation (30a - 30g) faisant saillie devant la surface de boule (23) dans une position de contact (K), qui est monté de manière à pouvoir tourner par rapport à la surface de boule (23) au niveau du dispositif d'attelage (11a - 11f) et présente une face d'entraînement en rotation (76) configurée pour un contact d'entraînement en rotation par friction et/ou à complémentarité de forme avec le logement d'attelage (18), et dans laquelle l'ensemble formant capteur (40) est configuré pour détecter un angle de rotation (34) de l'au moins un corps d'entraînement en rotation (30a - 30g) par rapport au support de boule (13), **caractérisée en ce que** l'au moins un corps d'entraînement en rotation (30a - 30g) présente une élasticité en direction de la position de contact (K) et/ou est contraint par ressort par un ensemble formant ressort (32) dans la position de contact (K), dans laquelle au moins un corps d'entraînement en rotation (30a - 30g) fait saillie devant la surface de boule (23).
